(19) Europäisches Patentamt
European Patent Office
Office européen des brevets

(11) **EP 3 184 278 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(51) Int Cl.:
***B29C 45/26*** *(2006.01)*      ***B29C 45/00*** *(2006.01)*
***B29C 45/73*** *(2006.01)*      ***B29C 70/88*** *(2006.01)*
***B29K 105/06*** *(2006.01)*      ***B29K 101/12*** *(2006.01)*
***B29C 70/06*** *(2006.01)*

(21) Anmeldenummer: **15202456.8**

(22) Anmeldetag: **23.12.2015**

(54) **SPRITZGUSSVERFAHREN ZUR HERSTELLUNG VON FORMTEILEN, MITTELS SPRITZGUSS HERGESTELLTES FORMTEIL SOWIE SPRITZGUSSWERKZEUG**

INJECTION MOULDING METHOD FOR THE PREPARATION OF MOULDED PARTS, MOULDED PART PRODUCED BY MEANS OF INJECTION MOULDING AND INJECTION MOULDING TOOL

PROCEDE DE MOULAGE PAR INJECTION DESTINE A FABRIQUER DES PIECES DE FORMAGE, PIECE DE FORMAGE FABRIQUEE PAR MOULAGE PAR INJECTION ET OUTIL DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.06.2017 Patentblatt 2017/26**

(73) Patentinhaber: **EMS-PATENT AG**
**7013 Domat / Ems (CH)**

(72) Erfinder: **CHEUNG, Ming-Jiann**
**Jiangsu Province 215021 (CN)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**EP-A1- 2 623 290**      **WO-A1-2009/036089**

• **H. Hamada ET AL: "Improvement of Weld Line Strength in Injection Molded FRTP Articles", INTERNATIONAL POLYMER PROCESSING, vol. 2, no. 3-4, 1 March 1988 (1988-03-01) , pages 131-136, XP055441971, DE ISSN: 0930-777X, DOI: 10.3139/217.880131**

**Beschreibung**

Die vorliegende Erfindung betrifft ein Verfahren zum Herstellen von spritzgegossenen, verstärkten Formteilen, deren Faserorientierung lokal gezielt eingestellt wird. Hierbei wird über eine geeignete, dynamisch gesteuerte Zusatzheizung in der Wandung des verwendeten Spritzgusswerkzeugs (variotherm beheizbarer Kanal) ein lokaler Kavitätsbereich zum Einspritzzeitpunkt auf eine Temperatur im Bereich oder oberhalb der Erstarrungstemperatur (auf jeden Fall über der Kristallisationstemperatur bei teilkristallinen bzw. über der Glasübergangstemperatur bei amorphen Kunststoffen) des Polymers (KunststoffFormmasse) erwärmt wird.

Beim konventionellen Spritzguss wird eine Kunststoff-Schmelze in ein temperiertes Werkzeug injiziert, dessen Werkzeugwandtemperatur normalerweise unterhalb der für den jeweiligen Kunststoff liegenden Erstarrungstemperatur liegt (Kristallisationstemperatur bei teilkristallinen oder Glasübergangstemperatur bei amorphen Kunststoffen). Dabei bleibt die Seele der Schmelzfront fließfähig und der Kunststoff wird durch den Spritzdruck in der Kavität vorangetrieben, während die Randzonen in der Nähe der Werkzeugwand rasch abkühlen und erstarren. Ist die Werkzeugkavität gefüllt und die Kunststoff-schmelze vollständig erstarrt, wir das Formteil entformt. Über den gesamten Spritzgusszyklus wird die Werkzeugwand bei gleicher Temperatur gehalten. Die Werkzeugtemperierung kann somit als eine Kühlung aufgefasst werden, um die Wärmeenergie der Schmelze einschließlich einer etwaigen Kristallisationswärme abzuführen, die bei jedem Einspritzen in das Werkzeug eingebracht wird.

Bei langen Fließwegen und gleichzeitig dünnen Wandstärken kann dies zum Einfrieren des Querschnitts führen und somit das vollständige Füllen der Kavität verhindern. Weiterhin werden strukturierte und hochglänzende Oberflächen nicht vollständig wiedergegeben. Außerdem kommt es beim Zusammentreffen von Fließfronten zur Bildung von sichtbaren Bindenähten.

Eine Abhilfe für oben genannte Probleme bietet die sogenannte variotherme Werkzeugtemperierung. Über eine Zusatzheizung wir die Kavität zum Einspritzzeitpunkt bis auf Höhe der Schmelztemperatur (mindestens oberhalb der Kristallisationstemperatur) des teilkristallinen Kunststoffs (oder Glasübergangstemperatur bei amorphen Kunststoffen) erwärmt und nach erfolgter Formfüllung auf Temperaturen deutlich unterhalb der Erstarrungstemperatur abgekühlt. Die Beheizung der Werkzeugwand erfolgt hierbei im Wesentlichen vollflächig und damit einheitlich. Durch die mit diesem Verfahren erzielbare höhere Schmelze- und Werkzeugtemperatur beim Einspritzen wird die Viskosität der Polymerschmelze deutlich reduziert und die Abformung problematischer Teile verbessert oder erst ermöglicht. Die Temperaturwechsel müssen dabei möglichst schnell erfolgen, damit eine ausreichende Produktivität gewährleistet werden kann.

Die Vorteile der variothermen Werkzeugtemperierung sind:

- Weniger Verzug und Deformationen der Bauteile
- Abbilden von Hochglanzoberflächen, sogar mit geschäumten Kunststoffen
- Vermeidung von Faserspuren auf der Oberfläche der Formteile
- Abformung dünnwandiger Bauteile möglich
- Verkürzung der Zykluszeiten bei dickwandigen Bauteilen
- Höhere Homogenität und damit höhere Festigkeiten
- Keine sichtbaren Bindenähte

Bei dieser Art der variothermen Werkzeugtemperierung wird die gesamte Kavität (Werkzeugwand) während des Spritzgusszyklus auf- bzw. abgekühlt. Im Fall unverstärkter Formmassen kann eine gewisse Verbesserung der Bindenahtfestigkeit festgestellt werden. Werden dagegen verstärkte Formmassen, die beispielsweise Kohle- oder Glasfasern als Verstärkungsfasern enthalten, verspritzt, ändert sich bei variothermer Werkzeugtemperierung die Faserorientierung nicht gegenüber dem konventionellen Spritzgussverfahren, da die Faserorientierung primär durch den Angussort und der sich daraus ergebenden Fliesswege definiert wird. Somit verschwinden zwar manche Bindenähte optisch (visuell) von der Formteiloberfläche, nicht aber aus dem Formteil selbst. Da die Festigkeit des Formteils auf Basis verstärkter Formmassen durch die Faserorientierung dominiert wird, wird daher die Bindenahtfestigkeit keineswegs verbessert.

Die WO 2009/036089 A1 beschreibt ein Verfahren zur Verarbeitung von mit verstärkenden Füllstoffen gefüllten Kunststoffen und daraus hergestellten Anwendungen, wobei die resultierenden Gegenstände die Fähigkeit besitzen, plattiert zu werden, um ein strukturell ästhetisches Produkt zu bilden, das im Wesentlichen frei von optischen Defekten ist.

Aus der EP 2 623 290 A1 ist ein mittels Spritzgussverfahren hergestellter Artikel bekannt, der aus einer thermoplastischen Harzzusammensetzung, umfassend 100 Gew.-Teile eines thermoplastischen Harzes und 50 Gew.-Teile oder weniger zumindest eines Füllstoffes sowie eines farbigen metallischen Pigmentes umfasst, gebildet ist, in dem zumindest eine Schweißnaht existiert und ein Längendurchmesser von 95 Gew.-% oder mehr des Füllstoffes innerhalb einer Querschnittstiefe von 50 pm oder weniger, ausgehend von der Oberfläche der Schweißnaht parallel zu der Oberfläche der Schweißnaht existiert.

H. Hamada et al. beschreiben in Intern. Polymer Processing II (1988) 3/4, S. 131-136 die Verbesserung von Schweißnahtstärken in mittels Spritzguss hergestellten Artikeln aus faserverstärkten thermoplastischen Materialien.

Daher ist es Aufgabe der vorliegenden Erfindung ein neues Spritzgussverfahren bereit zu stellen, das durch eine lokal begrenzte, variotherme Werkzeugtemperierung die Orientierung von Verstärkungsfasern innerhalb einer Kunststoffschmelze definiert einstellen kann und somit die Festigkeit in der Hauptbelastungsrichtung (Richtung der Hauptspannung) des Formteils verbessert wird.

Zudem ist es die Aufgabe der vorliegenden Erfindung, ein entsprechendes Formteil anzugeben, bei dem eine gezielte Ausrichtung der Orientierung der enthaltenen Fasern vorhanden ist. Eine weitere Aufgabe der vorliegenden Erfindung ist es, ein entsprechendes Spritzgusswerkzeug zur Herstellung eines erfindungsgemäßen Formteils bzw. zur Durchführung eines erfindungsgemäßen Verfahrens bereitzustellen.

Diese Aufgabe wird hinsichtlich eines erfindungsgemäßen Verfahrens mit den Merkmalen des Patentanspruchs 1, bezüglich eines entsprechend hergestellten Formteils mit den Merkmalen des Patentanspruchs 16 sowie hinsichtlich eines Spritzgusswerkzeugs mit den Merkmalen des Patentanspruchs 18 gelöst. Die jeweiligen abhängigen Patentansprüche stellen dabei vorteilhafte Weiterbildungen dar.

Die vorliegende Erfindung betrifft somit ein Spritzgussverfahren zur Herstellung von Formteilen aus thermoplastischen Formmassen, wobei diese Formmassen Verstärkungsfasern enthalten.

Die thermoplastischen Formmassen werden dabei im plastifiziertem Zustand in ein Spritzgusswerkzeug eingefüllt, das Spritzgusswerkzeug weist hierbei eine Kavität auf, das die äußere Form des herzustellenden Formteils wiedergibt. Die thermoplastischen Formmassen sind dabei auf eine vorgegebene Temperatur $\vartheta_{FM}$ erwärmt, diese Temperatur wird dabei so hoch gewählt, dass garantiert ist, dass die thermoplastische Formmasse sich im plastifiziertem Zustand, in dem ein Spritzguss erfolgen kann, befindlich ist.

Das Spritzgusswerkzeug weist dabei einen Angussort auf, über den die thermoplastische Formmasse in die Kavität des Spritzgusswerkzeugs eingetragen werden kann. Üblicherweise weisen Spritzgusswerkzeuge einen einzigen Angussort auf, die Erfindung ist allerdings nicht auf diese spezifische Ausführungsform beschränkt, ebenso kann es möglich sein, dass das Spritzgusswerkzeug mehrere Angussorte aufweist.

Gemäß dem erfindungsgemäßen Verfahren ist nunmehr vorgesehen, dass die Kavität des Spritzgusswerkzeugs mit der thermoplastischen Formmasse überbefüllt bzw. überfüllt wird. Eine Überbefüllung bzw. ein Überfüllen bedeutet dabei, dass verglichen mit dem Volumen der Kavität des Spritzgusswerkzeugs ein größeres Volumen an thermoplastischer Formmasse in die Kavität des Spritzgusswerkzeugs eingetragen wird. Ein Überbefüllen der Kavität des Spritzgusswerkzeugs impliziert somit, dass ein Teil der thermoplastischen Formmasse, nämlich das volumenmäßige Mehr an Formmasse, aus der Kavität des Spritzgusswerkzeugs austreten muss. Dies erfolgt über hierfür vorgesehene Austragsöffnungen in der Kavität des Spritzgusswerkzeugs, kann aber auch dadurch erfolgen, dass überschüssige Formmasse über Kontaktstellen, über die beispielsweise zwei Teilformen, die das Spritzgusswerkzeug bilden und über die die Kavität eingeschlossen wird, austritt. Erfindungsgemäß ist nunmehr vorgesehen, dass die Kavität des Spritzgusswerkzeugs in mindestens einer Wandung mindestens einen entlang einer Trajektorie verlaufenden variotherm beheizbaren Kanal aufweist.

Mittels dieses mindestens einen variotherm beheizbaren Kanals ist eine inhomogene Beheizung der die Kavität des Spritzgusswerkzeugs begrenzenden Wandung möglich. Mittels des mindestens einen variotherm beheizbaren Kanals können somit Temperaturgradienten in der Wandung des Spritzgusswerkzeugs realisiert werden. Im Vergleich zum Stand der Technik erfolgt somit mittels der variothermen Temperiertechnik keine vollflächige Beheizung der Wandung der Kavität des Spritzgusswerkzeuges, sondern lediglich eine lokal begrenzte Temperierung, die die oben genannten Effekte ermöglicht.

Der oder die variotherm beheizbaren Kanäle sind dabei in die Wandung des Spritzgusswerkzeuges eingebettet. Der variotherm beheizbare Kanal dient dabei der Temperierung der Wandung des Spritzgusswerkzeuges und somit der Oberfläche der Kavität. Als Trajektorie des oder der variotherm beheizbaren Kanäle wird dabei die Richtung verstanden, die der Kanal bzw. die Kanäle parallel zur die Kavität des Spritzgusswerkzeuges begrenzenden Wandung einnimmt. Vorzugsweise ist die Trajektorie diejenige vektorielle Komponente, die parallel zur die Kavität des Spritzgusswerkzeugs begrenzenden Wandung verläuft, und die in Projektion auf die Oberfläche den Verlauf des oder der variotherm beheizbaren Kanäle wiedergibt. Für den Fall, dass der variotherm beheizbare Kanal als gleichmäßig breites Band ausgebildet wird, wird beispielsweise die Trajektorie entlang der Mittellinie dieses Kanals gebildet. Bestimmung der Trajektorie entlang der Mittellinie kann ebenso bei variierenden Breiten des variotherm beheizbaren Kanals vorgenommen werden.

Die Trajektorie ist dabei bevorzugt über ihren gesamten Verlauf differenzierbar und/oder stetig; hiervon sind beispielsweise Bereiche ausgenommen, an denen eine Verzweigung des Kanals und somit auch der entsprechenden Trajektorie gegeben ist. Beispielhafte Verläufe der Trajektorie können dabei linear, gekrümmt, wellenförmig oder auch über einen gemeinsamen Zu- und Ablauf kreisförmig sein.

Gemäß einer bevorzugten Ausführungsform ist vorgesehen, dass lediglich ein einziger variotherm beheizbarer Kanal in der Wandung des Spritzgusswerkzeugs, oder pro Wandung des Spritzgusswerkzeugs ein einziger variotherm beheizbarer Kanal vorhanden ist. Ebenso ist es möglich, dass der mindestens eine variotherm beheizbare Kanal Verzweigungsstellen aufweist und in mehrere Bereiche, die ggfs. wieder zusammen zu einem einzigen variotherm beheizbaren Kanal gebündelt werden, verlaufen können.

Für den Fall, dass das Spritzgusswerkzeug mehrere variotherm beheizbare Kanäle aufweist, ist sicherzustellen, dass diese weit genug voneinander beabstandet sind, dass keine homogene Beheizung der Wandung der Kavität des Spritzgusswerkzeugs erfolgt, sondern ein inhomogenes Temperaturprofil erreicht wird. Hierbei ist beim Spritzgussvorgang sicherzustellen, dass die thermoplastische Formmasse im Bereich des variothermen Kanals bzw. der variothermen Kanäle noch verarbeitbar, d. h. schmelzflüssig bleibt, während in den übrigen Bereichen eine höhere Viskosität gegeben ist oder die thermoplastische Formmasse dort bereits erstarrt ist.

Beim erfindungsgemäßen Verfahren ist nunmehr vorgesehen, vor, während und/oder nach dem Füllen des Spritzgusswerkzeugs der den mindestens einen variothermen Kanal der Wandung aufweisende Bereich des Spritzgusswerkzeugs permanent oder zumindest zeitweise auf eine Temperatur $\vartheta_{VT}$ und der übrige Bereich der Wandung des Spritzgusswerkzeugs auf eine Temperatur $\vartheta_W$ eingestellt wird, wobei gilt $\vartheta_W < \vartheta_{VT}$. Diese Temperaturdifferenz wird zumindest bis zum abschließenden Abkühlen der thermoplastischen Formmasse aufrechterhalten.

Die zuvor genannte Temperaturdifferenz in den unterschiedlichen Bereichen des Spritzgusswerkzeugs kann beispielsweise über die gesamte Dauer des Spritzgusszyklus, d.h. des erfindungsgemäßen Verfahrens aufrecht erhalten werden, zumindest jedoch bis zum Abkühlen der thermoplastischen Formmasse bis zur Erstarrung. Dieses Abkühlen kann z.B. dadurch erreicht werden, dass die Spritzgussform insgesamt nicht mehr beheizt oder insgesamt aktiv gekühlt wird.

Ebenso ist es möglich, dass zu Beginn des Spritzgussprozesses zunächst gilt $\vartheta_W = \vartheta_{VT}$, d.h. die gesamte Spritzgussform die gleiche Temperatur aufweist. Erst im Laufe des Prozesses, d.h. beispielsweise beim Befüllen oder aber auch erst beim Überbefüllen oder sowohl während des Befüllens und des Überbefüllens können die variotherm beheizbaren Kanäle auf eine höhere Temperatur als die übrigen Bereiche des Spritzgusswerkzeugs temperiert werden. Die Temperaturdifferenz kann dabei auch dadurch erreicht werden, dass die Wandung des Spritzgusswerkzeugs in den übrigen Bereichen abgesenkt wird, indem sie beispielsweise nicht mehr beheizt oder dort gekühlt wird, wobei die Temperatur in den variothermen Kanälen beispielsweise durch Heizen aufrecht erhalten bleibt.

Die Temperierung des bzw. der variotherm beheizbaren Kanäle wird durch selektives Beheizen des variothermen Kanals ermöglicht.

Die Beheizung des variotherm beheizbaren Kanals kann mittels aus dem Stand der Technik bekannten Heizmethoden erzielt werden. Derartige Möglichkeiten sind aus dem Stand der Technik bekannt, hierzu wird beispielhaft auf die Publikation "Beitrag zur Entwicklung eines hochdynamischen variothermen Temperiersystems für Spritzgießwerkzeuge", Dissertation von M. H. Deckert, Technische Universität Chemnitz, eingereicht am 16. September 2011, verwiesen. Sämtliche der darin vorgestellten Möglichkeiten zur Realisierung von variothermen Temperiersystemen können auch zur Temperierung eines variotherm beheizbaren Kanals gemäß der vorliegenden Erfindung verwendet werden.

Nach Überbefüllen wird die Verstärkungsfasern enthaltende thermoplastische Formmasse bis zum Erstarren abgekühlt, das somit erzeugte Formteil wird nachfolgend der Spritzgussform entnommen.

Der wesentliche Aspekt der vorliegenden Erfindung ist somit das Vorhandensein eines oder mehrerer variotherm beheizbarer Kanäle, die in der Wandung des Spritzgusswerkzeugs entlang einer vorgegebenen Trajektorie verlaufen. Mittels dieses bzw. dieser variotherm verlaufenden Kanäle ist somit eine gezielte Temperierung der in der Kavität des Spritzgusswerkzeugs befindlichen plastischen Formmasse entlang dieser Trajektorie einstellbar. Die Temperaturverteilung an der Oberfläche der Wandung der Kavität des Spritzgusswerkzeugs ist somit inhomogen, dabei kann entlang der Trajektorie des oder der variotherm beheizbaren Kanäle eine wenigstens zeitweise höhere Temperatur wie in den übrigen Bereichen der Wandung des Spritzgusswerkzeuges erreicht werden. Die in die Kavität des Spritzgusswerkzeugs eingefüllte thermoplastische Formmasse kann in diesen Bereichen somit unabhängig von den übrigen Bereichen weiter erwärmt und somit auf ein höheres Temperaturniveau gebracht werden, so dass die Temperatur der Formmasse in diesen Bereichen über dem Niveau der übrigen Formmasse liegt. Hierdurch wird ermöglicht, dass die Viskosität der thermoplastischen Formmasse aufgrund dieser weiteren Erwärmung und des erzielten höheren Temperaturniveaus herabgesetzt wird und ein Fluss der thermoplastischen Formmasse entlang der Trajektorie des oder der variotherm beheizbaren Kanäle damit begünstigt wird. Ein Fluss der thermoplastischen Formmasse entlang dieser Trajektorie wird somit beim Befüllen, beim Überbefüllen, beim vollständigen Befüllen oder beim teilweisen Befüllen der Kavität des Spritzgusswerkzeugs, begünstigt. Durch den begünstigten Fluss der thermoplastischen Formmasse entlang der Trajektorie erfolgt somit ebenso eine Ausrichtung der Verstärkungsfasern, die innerhalb der thermoplastischen Formmasse dispergiert vorliegen entlang der Trajektorie des variotherm beheizbaren Kanals. Somit kann eine gezielte Einstellung der Orientierung der Verstärkungsfasern entlang der Trajektorie des oder der entlang der Trajektorie verlaufenden variotherm beheizbaren Kanäle erfolgen.

Erfindungsgemäß ist vorgesehen, dass das Spritzgusswerkzeug mindestens eine Überlauföffnung aufweist. Bei Überbefüllen des Spritzgusswerkzeuges tritt dabei die überschüssige thermoplastische Formmasse über die Überlauföffnung aus der Kavität des Spritzgusswerkzeugs aus. Bevorzugt schließt sich an die Überlauföffnung eine Überlaufkavität an, die jeweils mit einer Überlauföffnung und über die Überlauföffnung mit der Kavität des Spritzgusswerkzeugs in fluidischer Kommunikation steht. Die Überlaufkavität dient dabei dem Auffangen des überschüssigen Volumens an thermoplastischer Formmasse, das beim Überbefüllen der Spritzgussform aus der Überlauföffnung austritt. Das aufgefangene Volumen der thermoplastischen Formmasse kann recycelt und erneut bei dem Verfahren gemäß der vorliegenden Erfindung verwendet werden. Hierbei beginnt der mindestens eine variotherm beheizbare Kanal am Angussort des Spritzgusswerkzeugs und ist bis zur mindestens einen Überlauföffnung geführt, so dass die thermoplastische Formmasse bei Überfüllung des Spritzgusswerkzeugs aus der Kavität des Spritzgusswerkzeugs aus- und über die mindestens eine Überlauföffnung in die jeweilige Überlaufkavität eintreten kann.

Im Hinblick auf das erfindungsgemässe Spritzgussverfahren mit Überbefüllen des Spritzgusswerkzeugs werden die folgenden Temperaturführungen für die Phasen Füllen des Spritzgusswerkzeugs (a), Überbefüllen (c) und die Phase zwischen Befüllen und Überbefüllen (b), die als Wartephase ausgestaltet sein kann, während der keine weitere Formmasse in das Spritzgusswerkzeug aufgegeben wird, bevorzugt:

> (1) Konstante Temperaturführung: Die Temperaturen $\vartheta_W$ und $\vartheta_{VT}$ bleiben während der Phasen (a) bis (c) unverändert, wobei stets die Relation $\vartheta_W < \vartheta_{VT}$ gilt. $\vartheta_W$ ist auf tiefem Temperaturniveau, während $\vartheta_{VT}$ auf hohem Temperaturniveau liegt.

> (2) Erwärmen des variothermen Kanals: $\vartheta_W$ ist während der Phasen (a) bis (c) konstant auf einem tiefen Temperaturniveau. In Phase (a) differieren $\vartheta_W$ und $\vartheta_{VT}$ bevorzugt um weniger als 50 K und insbesondere gilt $\vartheta_W = \vartheta_{VT}$. $\vartheta_{VT}$ wird in Phase (b) auf das hohe Temperaturniveau gebracht, so dass für die Phasen (b) und (c) $\vartheta_W < \vartheta_{VT}$ ist.

> (3) Abkühlen der übrigen Werkzeugwand: Diese Alternative ist dadurch gekennzeichnet, dass $\vartheta_{VT}$ während der Phasen (a) bis (c) konstant auf hohem Temperaturniveau gehalten wird und $\vartheta_W$ in Phase (a) ein hohes Temperaturniveau aufweist. In Phase (a) weisen $\vartheta_W$ und $\vartheta_{VT}$ ähnliche Temperaturen auf, die bevorzugt weniger als 50 K auseinander liegen, insbesonder ist $\vartheta_W = \vartheta_{VT}$. Die Temperatur $\vartheta_W$ wird in Phase (b) auf ein tiefes Temperaturniveau abgesenkt, so dass für Phase (b) und (c) $\vartheta_W < \vartheta_{VT}$ ist.

Die Relation der Temperaturen $\vartheta_W$ und $\vartheta_{VT}$ in Phase (c) ist für die zuvor genannten Temperaturführungen (1) bis (3) insofern identisch, dass stets $\vartheta_W < \vartheta_{VT}$ ist sowie $\vartheta_{VT}$ stets auf hohem Temperaturniveau und $\vartheta_W$ stets auf tiefen Temperaturniveau liegt. Hierbei bedeutet hohes Temperaturniveau, dass die Formmasse in diesem Temperaturbereich fliessfähig ist und bleibt, auch wenn sie über einen längeren Zeitraum in diesem Zustand gehalten wird. Tiefes Temperaturniveau bedeutet, dass die Formmasse in diesem Temperaturbereich wenig oder nicht fliessfähig vorliegt, also entweder hochviskos oder erstarrt ist.

Die Temperatur $\vartheta_{VT}$ wird nach Abschluss der Phase (c) abgesenkt, so dass das Formteil dem Werkzeug entnommen werden kann.

Besonders bevorzugt wird die konstante Temperaturführung (1), die eine Erwärmung des variothermen Kanals oder eine Abkühlung der übrigen Werkzeugwand innerhalb der Phasen (a) bis (c) erübrigt, wodurch Phase (b) entfällt oder sehr kurz gehalten werden kann.

Gemäß dieser bevorzugten Ausführungsform, bei dem eine Überfüllung des Spritzgusswerkzeugs vorgenommen wird, ist es von Vorteil, wenn zumindest eine der nachfolgenden Maßnahmen ergriffen wird:

- 5 bis 100 Vol.-%, bevorzugt 10 bis 70 Vol.-% und besonders bevorzugt 15 bis 50 Vol.-% des Volumens der Kavität des Spritzgusswerkzeugs werden überfüllt; dabei entspricht das Volumen der Überlaufkavität vorzugsweise dem Volumenanteil der Kavität, der überbefüllt wird. Wenn also beispielsweise 100 Vol.-% des Volumens der Kavität des Spritzgusswerkzeugs überfüllt werden, bedeutet dies, dass ingesamt das zweifache Volumen der Kavität in das Werkzeug einschliesslich der Überlaufkavität während einem Spritzgusszyklus eingespritzt werden.

- nach vollständigem Befüllen wird eine Wartezeit von 2 bis 60 s eingehalten, bevor mit dem Überbefüllen begonnen wird, während der bevorzugt die Temperatur $\vartheta_{VT}$ im den mindestens einen variothermen Kanal der Wandung aufweisenden Bereich des Spritzgusswerkzeugs angehoben wird und/oder die Temperatur $\vartheta_W$ im übrigen Bereich der Wandung des Spritzgusswerkzeugs abgesenkt wird und/oder

- die Überfüllung dauert über eine Zeitspanne von 2 bis 60 s an.

Beispielsweise kann die Einstellung der Temperaturdifferenz dadurch erfolgen, dass ausschließlich eine Beheizung der variothermen Kanäle des Spritzgusswerkzeugs erfolgt, während die restlichen Bereiche des Spritzgusswerkzeugs nicht beheizt werden.

Während der oben genannten Wartezeit erfolgt dabei kein weiteres Zuführen von thermoplastischer Formmasse in die Kavität, dies wird erst nach Abschluss der Wartezeit vorgenommen. Diese weitere Zuführung kann somit der Nachdruckphase in einem konventionellen Spritzgusszyklus gleichgesetzt werden. Während der Wartezeit wird dabei bevorzugt die Temperierung im Bereich des variotherm beheizbaren Kanals oder der variotherm beheizbaren Kanäle aufrechterhalten. Optional kann im übrigen Bereich der Wandung der Kavität eine Abkühlung vorgenommen werden. Somit wird sichergestellt, dass die thermoplastische Formmasse in der Kavität des Spritzgusswerkzeugs dabei fließfähig und thermoplastisch verarbeitbar bleibt, wohingegen die thermoplastische Formmasse im übrigen Bereich der Kavität des Spritzgusswerkzeugs ggfs. schon abgekühlt und sehr oder gar erstarrt ist. Beim Nachdrücken erfolgt somit ein Fluss der thermoplastischen Formmasse bevorzugt, wenn nicht ausschließlich im Bereich der Trajektorie des oder der variotherm beheizbaren Kanäle, wodurch eine gezielte Ausrichtung der in der thermoplastischen Formmasse enthaltenen Verstärkungsfasern entlang des Flusses, d.h. entlang der Trajektorie erfolgt.

Einen besonderen Vorteil des erfindungsgemäßen Verfahrens ist, dass bedingt durch die Temperaturdifferenz im Bereich des mindestens einen variotherm beheizbaren Kanals und den übrigen Bereichen des Spritzgusswerkzeugs eine Einstellung der Orientierung der Verstärkungsfasern in der thermoplastischen Formmasse erfolgt, wobei eine im Wesentlichen anisotrope Ausrichtung der Verstärkungsfasern entlang der Trajektorie des mindestens einen variotherm beheizbaren Kanals erreicht wird.

Insbesondere ist hierbei gegeben, dass die Ausrichtung der Verstärkungsfasern durch einen Orientierungstensor $(a_{ij})$ einer Gruppe von n in einem finiten Volumenelement enthaltenen Verstärkungsfasern definiert ist, mit

$$(a_{ij}) = \begin{pmatrix} a_{11} & a_{12} & a_{13} \\ \cdots & a_{22} & a_{23} \\ \cdots & \cdots & a_{33} \end{pmatrix}$$

dessen Elemente $a_{ij}$ wie nachfolgende definiert sind

$$a_{ij} = \frac{1}{n}\sum_{k=1}^{n} a_{ij}^{k} = \frac{1}{n}\left(\sum_{k=1}^{n} p_i^k p_j^k\right)$$

wobei die Orientierung der Fasern durch die Diagonalelemente $a_{11}$, $a_{22}$ und $a_{33}$ des Orientierungstensors $(a_{ij})$ bestimmt wird,

wobei $p_i^k$ bzw. $p_j^k$ jeweils die Komponenten eines Vektors $\vec{p^k}$ der Länge 1, der parallel zur k-ten Faser verläuft, darstellen, wobei gilt

$$\vec{p^k} = \begin{pmatrix} p_1^k \\ p_2^k \\ p_3^k \end{pmatrix}$$

wobei der Vektor $\vec{p^k}$ in jedem betrachteten finiten Volumenelement des Bereichs des mindestens einen variotherm beheizbaren Kanals jeweils in einem lokalen Koordinatensystems angegeben wird, bei welchem

die x-Achse    im jeweiligen betrachteten finiten Volumenelement jeweils tangential zur Trajektorie des mindestens einen variotherm beheizbaren Kanals festgelegt wird,

die y-Achse    normal zu x orientiert ist und

die z-Achse    normal zu x und y orientiert ist,

wobei eine im wesentlichen anisotrope Ausrichtung dann gegeben ist, wenn der Wert des Elements $a_{11}$ des Orientierungstensors $(a_{ij})$ in jedem gegebenen finiten Volumenelement zumindest 0,5, bevorzugt 0,5 bis 0,98, weiter bevorzugt 0,6 bis 0,95, weiter bevorzugt 0,65 bis 0,9, insbesondere 0,7 bis 0,85 beträgt.

Die anisotrope Ausrichtung der Fasern kann somit dadurch bestimmt werden, dass eine repräsentative Gruppe von n Verstärkungsfasern hinsichtlich ihrer Orientierung bestimmt wird. Für jene Faser wird dabei ein separater Vektor festgelegt, der jeweilige Vektor verläuft dabei parallel zur jeweiligen betrachteten Faser. Das finite Volumenelement kann dabei beispielsweise als Kubus mit definierter Kantenlänge, die kleiner bemessen ist als die Ausdehnung des Bereichs des variotherm beheizbaren Kanals gewählt werden. Im Regelfall kann beispielsweise die mittels einer spektroskopischen Aufnahme ermittelte Auflösung zur Bemessung des finiten Volumenelements herangezogen werden. Zur Gruppe der n Verstärkungsfasern werden dabei diejenigen Fasern gezählt, die vollständig innerhalb des betrachteten finiten Volumenelements angeordnet sind, aber auch diejenigen Fasern, die von den Begrenzungsflächen des jeweiligen finiten Volumenelements geschnitten werden und somit nur partiell innerhalb des finiten Volumenelements liegen. Diese finite Volumenelement kann z.B. ein Voxel mit einer Kantenlänge im Bereich von 10 μm sein.

Für die anisotrope Ausrichtung ist dabei lediglich die Ausrichtung zur x-Komponente des jeweiligen lokalen Koordinatensystems relevant. Deswegen ist die voranstehend angegebene Definition der y- bzw. z-Komponente des jeweiligen Koordinatensystems nicht zwingend vorgesehen. Lediglich zu Zwecken der Klarheit kann beispielsweise die jeweilige y-Komponente des Koordinatensystems als orthogonal zur Wandung der Kavität des Spritzgusswerkzeuges angesehen werden.

Die Anisotropie ist dabei über den gesamten Bereich des variotherm beheizbaren Kanals bzw. der variotherm beheizbaren Kanäle ausgebildet, d.h. an jedem beliebigen Ort des Bereichs des variotherm beheizbaren Kanals erfüllt. Ausgenommen von dieser Definition sind dabei die Bereiche, an denen beispielsweise eine Verzweigung eines variotherm beheizbaren Kanals in mehrere beheizbare Kanäle oder ein Zusammenlegen von mehreren variotherm beheizbaren Kanälen zu einem einzelnen variotherm beheizbaren Kanal erfolgt. An diesen Stellen bzw. in diesen Bereichen ist naturgemäß aufgrund der durch mehrere variotherm beheizbaren Kanäle bedingten unterschiedlichen Orientierung keine Vorzugsorientierung der Verstärkungsfasern feststellbar.

Der Bereich des variotherm beheizbaren Kanals bzw. der variotherm beheizbaren Kanäle im fertigen Formteil entspricht dem Bereich, der durch Fällen eines Lotes entlang der Begrenzungen des variotherm beheizbaren Kanals zur Wandung der Kavität im Formteil eingeschlossen wird.

Die dreidimensionale Bestimmung der Ausrichtung von Verstärkungsfasern, wie z.B. Glasfasern ist aus dem Stand der Technik bekannt und beispielsweise in dem Artikel "Pipeline zur dreidimensionalen Auswertung und Visualisierung der Faserverteilung in glasfaserverstärkten Kunststoffteilen aus-Röntgen-Computertomografiedaten", J. Kastner et al., DACH-Jahrestagung 2008 in St. Gallen - Di.3.A.1 beschrieben. Die Faserorientierung wird hierbei anhand von Voxeln mit einer Größe von 8,6 $\mu$m bestimmt. Die Bestimmung der Faserverteilung mittels Computertomografie sowie die Bestimmung des Orientierungstensors kann auch nach der vorliegenden Erfindung anhand der Ausführungen dieses Artikels vorgenommen werden.

Das erfindungsgemäße Verfahren, insbesondere betreffend die Phase (c), kann dabei bevorzugt derart ausgeführt werden, dass mindestens eine der nachfolgenden Bedingungen erfüllt ist:

- $\vartheta_{VT} > \vartheta_G$ bzw. $\vartheta_{VT} > \vartheta_K$, bevorzugt $\vartheta_{VT} - \vartheta_G \geq 10$ K bzw. $\vartheta_{VT} - \vartheta_K \geq 10$ K, wobei $\vartheta_G$ die Glasübergangstemperatur von amorphen thermoplastischen Formmassen und $\vartheta_K$ die Kristallisationstemperatur von teilkristallinen thermoplastischen Formmassen bedeutet,

- $\vartheta_{VT}$ ist im Bereich von $\vartheta_{FM} \pm 40$ K und/oder

- $\vartheta_{VT} - \vartheta_W \geq 50$ K, bevorzugt $\vartheta_{VT} - \vartheta_W \geq 100$ K.

$\vartheta_{FM}$ ist die Temperatur der Formmasse beim Eintritt in die Kavität des Spritzgusswerkzeugs.

Das thermische Verhalten (Schmelzpunkt ($\vartheta_{FM}$), Schmelzenthalpie ($\Delta Hm$), Kristallisationstemperatur ($\vartheta_K$) und Glasumwandlungstemperatur ($\vartheta_G$)) wurde anhand der ISO-Norm 11357 am Granulat bestimmt. Die Differential Scanning Calorimetry (DSC) wurde mit Aufheiz-/Abkühlrate von 20 °C/min durchgeführt.

Der mindestens eine variotherm beheizbare Kanal kann dabei ein oder beidseitig in der Kavität des Spritzgusswerkzeuges ausgebildet sein. Möglicherweise wird dem Spritzgussverfahren ein Spritzgusswerkzeug eingesetzt, das aus mindestens zwei Teilformen gebildet ist, die zusammengefügt eine Kavität und somit die äußere Form des herzustellenden Formteils wiederspiegeln. Gemäß dieser bevorzugten Ausführungsform ist somit vorgesehen, dass in jeder der Kavitäten mindestens ein variothermer Kanal eingelassen bzw. dort ausgebildet ist. In einer bevorzugten Ausführungsform sind die beidseitig in der jeweiligen Wandung des Spritzgusswerkzeugs vorhandenen variotherm beheizbaren Kanäle dabei so angeordnet, dass die in Projektion auf die jeweilige Oberfläche kongruent zueinander verlaufen. Bei einer derartigen Ausführungsform wird somit von den beidseitig der Wandung angeordneten variotherm beheizbaren Kanälen der gleiche Volumenbereich innerhalb der Spritzgussform temperiert.

Gemäß einer weiter bevorzugten Ausführungsform macht die Summe der Fläche des mindestens einen variotherm beheizbaren Kanals (d.h. die Gesamtfläche der an der Oberfläche der Kavität durch den oder die variotherm beheizbaren Kanäle temperierbaren Fläche) 1 bis 50 %, bevorzugt 3 bis 30 %, besonders bevorzugt 4 bis 20 %, insbesondere 5 bis 10 % der inneren Oberfläche der Kavität des Spritzgusswerkzeugs aus.

Beispielsweise kann der mindestens eine variotherm beheizbare Kanal als variotherm beheizbares Band, bevorzugt mit konstanter Breite ausgebildet sein, wobei die Breite bevorzugt 0,2 bis 30 mm, bevorzugt 0,5 bis 10 mm beträgt. Die vorliegende Erfindung ist allerdings nicht hierauf limitiert.

Eine mögliche Ausführungsform der vorliegenden Erfindung sieht vor, dass das Spritzgusswerkzeug mindestens einen Durchbruch aufweist. Dieser Durchbruch bedingt eine Aussparung im herzustellenden Formteil, d.h. das fertige Formteil weist an der Stelle, an der das Spritzgusswerkzeug seinen Durchbruch aufweist, ein Loch auf. Dieser Durchbruch ist hinsichtlich seiner Geometrie nicht beschränkt und kann beispielsweise rund, oval, n-eckig, wobei n eine natürliche ganze Zahl von 3 oder mehr ist, ausgebildet sein.

Bei dieser Ausführungsform, bei der das Spritzgusswerkzeug mindestens einen Durchbruch aufweist, ist es von Vorteil, wenn mindestens ein variotherm beheizbarer Kanal, vollständig oder zumindest bereichsweise umlaufend um den mindestens einen Durchbruch ausgebildet ist, bevorzugt um jeden Durchbruch ein- oder beidseitig der Kavität in der Wandung des Spritzgusswerkzeugs jeweils ein variotherm beheizbarer Kanal ausgebildet ist, der den jeweiligen Durchbruch einfasst.

Gemäß dieser Ausführungsform ist es somit bevorzugt, wenn beispielsweise ein variotherm beheizbarer Kanal um den Durchbruch herum ausgebildet ist, der Durchbruch ist damit vollständig von einem entsprechenden variotherm beheizbaren Kanal eingefasst.

Bevorzugt hierbei ist, dass der mindestens eine vollständig oder zumindest bereichsweise umlaufend um den mindestens einen Durchbruch ausgebildete variotherme Kanal mindestens eine Fortsetzung in einer Zulaufrichtung und mindestens eine Fortsetzung in einer Ablaufrichtung aufweist, wobei bevorzugt die Fortsetzung in Zulaufrichtung bis zum Angussort des Spritzgusswerkzeugs fortgeführt ist und/oder die Fortsetzung in Ablaufrichtung bis zur mindestens einen Überlauföffnung fortgeführt ist. Bei dieser Ausführungsform ist vorgesehen, dass der variotherm beheizbare Kanal, der den Durchbruch einfasst, jeweils zwei Fortsätze aufweist, einen in Zulaufrichtung - dies entspricht der hauptsächlichen Strömungsrichtung der thermoplastischen Formmasse beim Spritzgussvorgang auf den Durchbruch hin - bzw. in Ablaufrichtung - dies entspricht dem Fluss der thermoplastischen Formmasse nach Umfließen des Durchbruchs. Die jeweiligen Fortsätze dieses variotherm beheizbaren Kanals um den Durchbruch herum sind ebenso als variotherm beheizbare Bereiche ausgebildet. Der variotherm beheizbare Kanal setzt sich in diesem Falle aus dem Bereich um den Durchbruch herum sowie den Fortsätzen zusammen. Von einem Fortsatz aus gesehen erfolgt somit eine Verzweigung des variotherm beheizbaren Kanals in einem Bereich, der um einen entsprechenden Durchbruch herum gebildet ist. An einer anderen Stelle münden somit die zwei Teilarme des variotherm beheizbaren Kanals wiederum in einem Fortsatz in Ablaufrichtung.

Hierbei ist es insbesondere bevorzugt, wenn die Fortsetzung in Zulaufrichtung und die Fortsetzung in Ablaufrichtung in Projektion des Durchbruchs versetzt zueinander angeordnet sind, bevorzugt um mindestens 120° versetzt zueinander angeordnet sind, insbesondere um 180° ± 10° versetzt zueinander angeordnet sind. Der Bereich 180° ± 10° schließt dabei jeden Winkel ein, der innerhalb dieses Bereichs liegt, insbesondere auch genau 180°.

Für den Fall, dass das herzustellende Formteil im Gebrauch eine Hauptzugbelastungsrichtung aufweist, d.h. eine Richtung, in der das Formteil im Gebrauch permanent oder zumindest zeitweise unter Zug- und/oder Zugbelastung steht, ist es insbesondere von Vorteil, dass jeweils die Fortsetzung in Zulaufrichtung und die Fortsetzung in Ablaufrichtung unabhängig voneinander in Projektion des Durchbruchs eine Richtung aufweisen, die maximal 60°, bevorzugt maximal 50°, weiter bevorzugt maximal 40°, insbesondere maximal 30° von der Hauptzugbelastungsrichtung abweichen. Besonders bevorzugt gilt diese Bedingung sowohl für den Zu- als auch den Ablauf. Hierdurch kann erreicht werden, dass die Verstärkungsfasern im Bereich des Durchbruchs im Wesentlichen, d.h. zum großen Teil in Richtung der Hauptzugbelastungsrichtung orientiert sind, d.h. eine anisotrope Verteilung gemäß der oben angegebenen Definition in Richtung der Hauptzugsbelastungsrichtung erreicht werden kann. Eine Ausrichtung der Verstärkungsfasern quer zur Hauptzugsbelastungsrichtung kann somit im Bereich des Ortes des variothermen Kanals bzw. der variothermen Kanäle im Wesentlichen unterbunden werden. Bei einer derartigen Ausführungsform kann somit eine deutliche Verstärkung des Formteils in Richtung der Hauptzugsbelastungsrichtung, verglichen mit Formteilen, die aus einem herkömmlichen Spritzgussprozess resultieren, erzielt werden.

Die thermoplastische Formmasse, die gemäß dem erfindungsgemäßen Verfahren eingesetzt werden kann, ist dabei bevorzugt aus mindestens einem thermoplastischen Matrixpolymer oder einem Gemisch aus mindestens zwei thermoplastischen Matrixpolymeren, in dem die Verstärkungsfasern dispergiert vorliegen, gebildet. Die thermoplastische Formmasse kann selbstverständlich noch gängige Ergänzungsstoffe, die in thermoplastischen Formmassen enthalten sind, wie beispielsweise die üblichen Additive, Flammschutzmittel, Formungshilfsstoffe, etc. beinhalten. Das Matrixpolymer ist dabei bevorzugt ausgewählt aus der Gruppe bestehend aus Polyamiden, einschliesslich Polyamidimid, Polyetheramid und Polyesteramid; Polycarbonaten; Polyolefine, insbesondere Polyethylen, Polypropylen und Polystyrol oder Polyvinylchlorid (PVC); Polyacrylaten, insbesondere Polyacrylsäureester, wie z.B. Polymethyl(meth)acrylat; Acrylnitril-Butadien-Styrol-Copolymerisat, Acrylnitril-Styrol-Copolymer; Polyestern, insbesondere Polyethylenterephthalat, Polybutylenterephthalat oder Polycyclohexylenterephthalat, Polysulfonen (insbesondere des Typs PSU, PESU, PPSU), Polyphenylensulfid; Polyethern, insbesondere Polyoxymethylen, Polyphenylenether und Polyphenylenoxid; flüssigkristallinen Polymeren; Polyetherketonen; Polyetheretherketonen; Polyimiden; Polyesterimiden, Polyetheresteramiden; Polyurethanen, insbesondere des Typs TPU oder PUR; Polysiloxanen; Zelluloid sowie Mischungen oder Kombinationen hieraus.

Bevorzugte Verstärkungsfasern sind vorzugsweise ausgewählt aus der Gruppe bestehend aus Glasfasern, Kohlenstofffasern (Karbonfasern, Graphitfasern), Aramidfasern und Whiskern. Bevorzugt werden Glasfasern und Kohlenstofffasern eingesetzt.

Die Verstärkungsfasern, insbesondere die Glasfasern werden bevorzugt in Form endloser Stränge oder in geschnittener Form, insbesondere in Form von Kurzfasern, wie z.B. Kurzglasfasern (Schnittglas) in die Formmasse eingearbeitet.

Im Falle von Kurzfasern, insbesondere Kurzglasfasern weisen diese der Formmasse zugesetzten Fasern eine bevorzugte Länge von 0,2 mm bis 20 mm, bevorzugt von 1 bis 6 mm, insbesondere von 2 bis 5 mm auf.

Vorzugsweise sind die Verstärkungsfasern mit einer Schlichte und/oder einem Haftvermittler ausgerüstet.

Generell können die Glasfasern einen kreisförmigen Querschnitt aufweisen oder einen nicht-kreisförmigen Querschnitt, wobei auch Mischungen von solchen Systemen eingesetzt werden können.

Bevorzugt werden im Fall von runden Glasfasern solche mit einen Durchmesser von 5 bis 20 $\mu$m, bevorzugt von 6 bis 15 $\mu$m und besonders bevorzugt von 7 bis 12 $\mu$m eingesetzt.

Bevorzugt werden im Fall von flachen Fasern solche eingesetzt, welche ein Verhältnis der senkrecht aufeinander stehenden Querschnittsachsen (Hauptquerschnittsachse zu Nebenquerschnittsachse) größer oder gleich 2, insbesondere im Bereich von 2,8 - 4,5, aufweisen, und deren kleinere Querschnittsachse einer Länge von $\geq 4$ $\mu$m aufweist.

Die Glasfasern bestehen dabei bevorzugt aus E-Glas. Es können aber auch alle anderen Glasfasersorten, wie z.B. A-, C-, D-, M, S-, R-Glasfasern oder beliebige Mischungen davon oder Mischungen mit E-Glasfasern eingesetzt werden. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, Aminosilan oder Epoxysilan, ausgerüstet sein können.

Die Glasfasern können teilweise oder ganz durch Whisker ersetzt werden. Unter Whisker sind nadelförmige Kristalle, insbesondere Einkristalle aus Metallen, Oxiden, Boriden, Carbiden, Nitriden, Polytitanat, Kohlenstoff usw. mit meist polygonalem Querschnitt zu verstehen, z. B. Kaliumtitanat-, Aluminiumoxyd-, Siliciumcarbid-Whiskers. Whiskers weisen im Allgemeinen einen Durchmesser von 0,1 bis 10 $\mu$m und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS Mechanismus) oder aus einem Dreiphasensystem (VLS-Mechanismus).

Die Formmassen, die für das erfindungsgemäße Spritzgussverfahren eingesetzt werden, können allein oder zusammen mit anderen Verstärkungsfasern auch Kohlenstofffasern enthalten. Kohlenstofffasern, auch Karbonfasern bzw. Kohlefasern genannt, sind industriell hergestellte Verstärkungsfasern aus kohlenstoffhaltigen Ausgangsmaterialien, die durch Pyrolyse (Oxidation und Carbonisation) in graphitartig angeordneten Kohlenstoff umgewandelt werden. Anisotrope Kohlenstofffasern zeigen hohe Festigkeiten und Steifigkeiten bei gleichzeitig geringer Bruchdehnung in axialer Richtung.

Die Kohlenstofffasern werden bevorzugt als Kohlenstofffaserbündel bestehend aus mehreren hundert bis hunderttausend Kohlenstofffasern, den sogenannten Einzelfilamenten, die einem Durchmesser von 5 bis 9 $\mu$m, eine Zugfestigkeit von 1000 bis 7000 MPa und einen Elastizitätsmodul von 200 bis 700 GPa aufweisen, eingesetzt. Üblicherweise werden 1.000 bis 24.000 Einzelfilamente zu einem Multifilamentgarn (endloses Kohlenstofffaserbündel, Roving) zusammengefasst, das aufgespult wird. Die Weiterverarbeitung zu textilen Halbzeugen wie z. B. Geweben, Geflechten oder Multiaxialgelegen erfolgt auf Webmaschinen, Flechtmaschinen oder Multiaxial-Wirkmaschinen bzw. im Bereich der Herstellung von faserverstärkten Kunststoffen direkt auf Prepreganlagen, Strangziehanlagen (Pultrusionsanlagen) oder Wickelmaschinen. Als Kurzschnittfasern können die Kohlenstofffasern auch den Polymeren bzw. Formmassen direkt beigemischt und über Extruder- und Spritzgussanlagen zu Kunststoffbauteilen verarbeitet werden.

Der Gewichtsanteil der Verstärkungsfasern in der thermoplastischen Formmasse beträgt dabei vorzugsweise 5 bis 80 Gew.-%, bevorzugt 20 bis 70 Gew.-% und insbesondere bevorzugt 25 bis 65 Gew.-%.

Die thermoplastische Formmasse kann aus den vorgenannten Bestandteilen gebildet sein, ebenso können auch gängige Zusatzstoffe, wie z.B. partikuläre Füllstoffe und Pigmente, Stabilisatoren (Hitze- und Lichtstabilisatoren, Antioxidantien), UV-Absorber, UV-Blocker, Verarbeitungshilfsmittel, Schlagzähmodifikatoren, Haftvermittler, Kristallisations-Beschleuniger oder -Verzögerer, Fließhilfsmittel, Gleitmittel, Entformungsmittel, Weichmacher, Radikalfänger, Antistatika, Flammschutzmittel, Farb- und Markierungsstoffe, Nanoteilchen in Plättchenform, Schichtsilikate, Leitfähigkeitsadditive, wie Ruß, Graphitpulver oder Kohlenstoffnanofibrillen, Additive zur Verbesserung der Wärmeleitfähigkeit, wie z.B. Bornitrid, Alumniumnitrid.

Teilchenförmige Füllstoffe sind bevorzug z.B. Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Voll- oder Hohl-Glaskugeln oder gemahlenem Glas, Glasflakes, dauerhaft magnetische bzw. magnetisierbare Metallverbindungen und/oder Legierungen, Pigmente, insbesondere Bariumsulfat, Titandioxid, Zinkoxid, Zinksulfid, Eisenoxid, Kupferchromit, oder Mischungen davon ausgewählt sind. Die Füllstoffe können auch oberflächenbehandelt sein.

Die beim erfindungsgemässen Spritzgussverfahren bevorzugt verwendeten Formmassen haben eine Schmelzviskosität bei verfahrenstypischen Scherraten (Scherviskosität) von 100 bis 10'000 s$^{-1}$, insbesondere bei 1'000 bis 10'000 s$^{-1}$, gemessen nach ISO 11443, bevorzugt im Bereich von 10 bis 10'000 Pas, besonders besvorzugt im Bereich von 20 bis 3'000 Pas und ganz besonders bevorzugt im Bereich von 30 bis 1'000 Pas. Die der Bestimmung der Schmelzviskosität zugrunde liegende Temperatur entspricht dabei der für diese Formmasse typischen Messtemperatur im Hinblick auf die MVR-Bestimmung (melt volume flow rate) nach ISO 1133, wie sie in den Datenblättern der Hersteller angegeben wird. Ist diese nicht verfügbar, wird eine Messtemperatur, die 5 bis 100 °C, bevorzugt 10 bis 40 °C oberhalb der Schmelztemperatur (teilkristalline Kunststoffmatrix) bzw. der Glasübergangstemperatur (amorphe Kunststoff matrix) der Formmasse liegt, gewählt. Beispielsweise kann eine mit 30 bis 60 Gew.-% Glasfasern gefüllte Polyamidformmasse mit PA 6T/6I (70:30) bei 335 bis 355 °C gemessen werden.

Somit kann beim Überbefüllen, Befüllen oder teilweisen Befüllen des Spritzgusswerkzeugs die Schmelzviskosität der thermoplastischen Formmasse am Einspritzort in die Kavität des Spritzgusswerkzeugs durch Wahl von $\vartheta_{FM}$ vorzugsweise auf 10 bis 8000 Pas, bevorzugt 50 bis 5000 Pas, eingestellt werden. Vorzugsweise beträgt der Druck, mit dem die thermoplastische Formmasse in die Kavität des Spritzgusswerkzeugs eingespritzt wird, zwischen 50 bis 2000 bar.

Zudem betrifft die vorliegende Erfindung ein Formteil, das aus einer mit einer mit Verstärkungsfasern befüllten thermoplastischen Formmasse gebildet ist. Das Formteil lässt sich dabei nach dem voranstehenden Verfahren herstellen. Das erfindungsgemäße Formteil zeichnet sich dadurch aus, dass die Verstärkungsfasern in den Bereichen, die beim Herstellungsverfahren mit den Bereichen des Spritzgusswerkzeugs, in denen der mindestens eine variotherm beheizbaren Kanal ausgebildet war, eine im Wesentlichen anisotrope Ausrichtung der Verstärkungsfasern entlang der Trajektorie des mindestens einen variotherm beheizbaren Kanals aufweist.

Hierdurch wird eine deutlich erhöhte Zugfestigkeit des Bauteils erreicht, verglichen mit ansonsten identischen Bauteilen, die mittels konventionellem Spritzguss (d.h. ohne variotherme Beheizung im o.g. Sinne) bei gleichem Angussort hergestellt wurden.

Die Ausrichtung des Verstärkungsfasern wird dabei durch einen Orientierungstensor (a) einer Gruppe von n in einem finiten Volumenelement enthaltenen Verstärkungsfasern definiert, mit

$$\left(a_{ij}\right) = \begin{pmatrix} a_{11} & a_{12} & a_{13} \\ \cdots & a_{22} & a_{23} \\ \cdots & \cdots & a_{33} \end{pmatrix}$$

dessen Elemente $a_{ij}$ wie nachfolgende definiert sind

$$a_{ij} = \frac{1}{n}\sum_{k=1}^{n} a_{ij}^{k} = \frac{1}{n}\left(\sum_{k=1}^{n} p_{i}^{k}\, p_{j}^{k}\right)$$

wobei die Orientierung der Fasern durch die Diagonalelemente $a_{11}$, $a_{22}$ und $a_{33}$ des Orientierungstensors $(a_{ij})$ bestimmt wird,

wobei $p_{i}^{k}$ bzw. $p_{j}^{k}$ jeweils die Komponenten eines Vektors $\overrightarrow{p^{k}}$ der Länge 1, der parallel zur k-ten Faser verläuft, darstellen, wobei gilt

$$\overrightarrow{p^{k}} = \begin{pmatrix} p_{1}^{k} \\ p_{2}^{k} \\ p_{3}^{k} \end{pmatrix}$$

wobei der Vektor $\overrightarrow{p^{k}}$ in jedem betrachteten finiten Volumenelement des vom mindestens einen variotherm beheizbaren Kanal temperierten Bereichs jeweils in einem lokalen Koordinatensystems angegeben wird, bei welchem

die x-Achse    im jeweiligen betrachteten finiten Volumenelement jeweils tangential zur Trajektorie des mindestens einen variotherm beheizbaren Kanals festgelegt wird,

die y-Achse    normal zu x orientiert ist und

die z-Achse    normal zu x und y orientiert ist,

wobei eine im wesentlichen anisotrope Ausrichtung dann gegeben ist, wenn der Wert des Elements $a_{11}$ des Orientierungstensors $(a_{ij})$ in jedem gegebenen finiten Volumenelement zumindest 0,5, bevorzugt 0,5 bis 0,98, weiter bevorzugt 0,6 bis 0,95, weiter bevorzugt 0,65 bis 0,9, insbesondere 0,7 bis 0,85 beträgt.

Bezüglich der weiteren Definitionen von n bzw. den weiteren Normalkoordinaten y und z wird auf die obenstehend gemachten Ausführungen verwiesen.

Insbesondere ist das erfindungsgemäße Formteil ausgewählt aus der Gruppe bestehend aus Strukturbauteilen mit hohen mechanischen Anforderungen und Funktionsteilen mit hohen Dimensionsgenauigkeitsanforderung.

Die Erfindung betrifft zudem ein Spritzgusswerkzeug zur Herstellung von Formteilen aus Verstärkungsfasern enthaltenden thermoplastischen Formmassen mittels Spritzgusses, umfassend mindestens zwei Teilformen, die eine eine äußere geometrische Gestaltung eines herzustellenden Formteils abbildende Kavität einschließen, wobei in mindestens einer der Teilformen mindestens ein Einlass zum Befüllen der Kavität mit einer in plastifiziertem Zustand befindlichen Verstärkungsfasern enthaltenden thermoplastischen Formmasse (Angussort) vorgesehen ist, und in einer oder allen Teilformen mindestens ein variotherm beheizbarer Kanal in der die Kavität begrenzenden Wandung des oder der Teilformen ausgebildet ist. Das erfindungsgemäße Spritzgusswerkzeug kann insbesondere beim zuvor beschriebenen erfindungsgemäßen Verfahren zur Herstellung von Formteilen mittels Spritzgusses verwendet werden. Sämtliche der dortigen Ausführungen bezüglich der spezifischen Ausgestaltung des Spritzgusswerkzeugs, insbesondere des mindestens einen variotherm beheizbaren Kanals gelten selbstverständlich ebenso für das erfindungsgemäß vorgestellte Spritzgusswerkzeug.

Eine bevorzugte Ausführungsform des Spritzgusswerkzeugs sieht vor, dass alle Teilformen mindestens einen Durchbruch aufweisen, der eine Aussparung im herzustellenden Formteil bedingt, wobei mindestens ein variotherm beheizbarer Kanal vollständig oder zumindest bereichsweise umlaufend um den mindestens einen Durchbruch ausgebildet ist, und eine Fortsetzung in einer Zulaufrichtung und eine Fortsetzung in einer Ablaufrichtung aufweist, und vorzugsweise die Fortsetzung in Zulaufrichtung und die Fortsetzung in Ablaufrichtung in Projektion des Durchbruchs versetzt zueinander angeordnet sind, bevorzugt um mindestens 120 ° versetzt zueinander angeordnet sind, insbesondere insbesondere um 180° ± 10° versetzt zueinander angeordnet sind. Der Bereich 180° ± 10° schließt dabei jeden Winkel ein, der innerhalb dieses Bereichs liegt, insbesondere auch genau 180°.

Weiter vorzugsweise ist vorgesehen, dass das herzustellende Formteil im Gebrauch eine Hauptzugbelastungsrichtung aufweist, wobei die Fortsetzung in Zulaufrichtung und die Fortsetzung in Ablaufrichtung in Projektion des Durchbruchs jeweils eine Richtung aufweisen, die maximal 60°, bevorzugt maximal 50°, weiter bevorzugt maximal 40°, insbesondere maximal 30° von der Hauptzugbelastungsrichtung abweicht.

Das Spritzgusswerkzeug weist mindestens eine Überlauföffnung auf, die in fluidischer Kommunikation mit der Kavität steht, in die beim Überfüllen des Spritzgusswerkzeugs thermoplastische Formmasse aus der Kavität fließen kann, wobei die Überlauföffnung weiter bevorzugt jeweils in eine Überlaufkavität mündet.

Erfindungsgemäß beginnt der mindestens eine variotherm beheizbare Kanal am Angussort des Spritzgusswerkzeugs und endet bevorzugt an der mindestens einen Überlauföffnung.

Die zuvor beschriebene Fortsetzung ist bevorzugt bis zum Angussort des Spritzgusswerkzeugs ausgeführt; alternativ oder zusätzlich hierzu ist es ebenso möglich, dass die Fortsetzung in Ablaufrichtung bis zur Überlauföffnung fortgeführt ist.

Gemäß einer weiter bevorzugten Ausführungsform macht die Summe der Fläche des mindestens einen variotherm beheizbaren Kanals 1 bis 50 %, bevorzugt 3 bis 30 %, besonders bevorzugt 4 bis 20 %, insbesondere 5 bis 10 % der inneren Oberfläche der Kavität des Spritzgusswerkzeugs aus.

Alternativ oder zusätzlich hierzu ist es ebenso bevorzugt, dass der mindestens eine variotherm beheizbare Kanal als variotherm beheizbares Band, bevorzugt mit konstanter Breite ausgebildet ist, wobei die Breite bevorzugt 0,2 bis 30 mm, bevorzugt 0,5 bis 10 mm beträgt.

Weiter von Vorteil ist es, dass das erfindungsgemäße Spritzgusswerkzeug eine Kühlung aufweist, mittels der die Kavität des Spritzgusswerkzeugs begrenzende Wandung gekühlt werden kann. Mittels dieser Kühlung ist insbesondere die gesamte Wandung der Kavität des Spritzgusswerkzeugs kühlbar, so dass das Abkühlen und das Erstarren der in der Kavität befindlichen thermoplastischen Formmasse und somit insgesamt der Endformungsvorgang deutlich beschleunigt werden kann.

Die vorliegende Erfindung wird anhand der nachfolgenden Ausführungen und Figuren näher erläutert, ohne die Erfindung jedoch auf die Beispiele zu beschränken.

Das erfindungsgemäße Verfahren ermöglicht, die Orientierung der Fasern innerhalb eines Formteils zu beeinflussen und innerhalb spezifischer Bereiche im Wesentlichen anisotrop auszugestalten.

Mit dem erfindungsgemäßen Verfahren kann das Formteil bei gleicher Lage des Angussorts so ausgelegt werden, dass die hauptsächliche Faserorientierung (Tensor der Faserorientierung x-Richtung) mit dem maximalen Hauptspannungsvektor (beabsichtigte Belastung des Formteils in x-Richtung) in allen mechanisch relevanten Bereichen übereinstimmt. Erfindungsgemäß stimmt die Faserorientierung über die gesamte Dicke des Probekörperes wenigstens zu 50%, bevorzugt wenigstens zu 60% und insbesondere bevorzugt zu wenigstens 65 oder gar zu 70 % mit der Richtung der Hauptspannungsachse (X-X) überein. Beim konventionellen Spritzguss und gleicher Angusslage liegt der Tensor der Faserorientierung gemittelt über die Dicke es Probekörperes höchstens zu 35% in Richtung es Hauptspannungsvektors. Lediglich in den Randbereichen wird eine Orientierung von etwas über 40% in Richtung des Hauptspannungsvektors erzielt.

Weicht die Faserorientierung mehrheitlich von der Hauptspannungsachse ab, wie dies beim konventionellen Spritzguss der Fall ist, kann das Potential im Hinblick auf die Materialfestigkeit nicht voll ausgeschöpft werden. D.h. ein Versagen des Bauteils tritt bereits bei niedrigem Spannungsniveau ein.

Mit dem erfindungsgemäßen Verfahren lassen sich daher im Vergleich zum konventionellen Spritzgussverfahren (gleiche Angusslage) deutlich höhere Festigkeiten bis zum Versagen des Formteils erreichen, weil die die Verstärkungsfasern am Ort der höchsten Spannung mehrheitlich in Richtung des Spannungsvektors ausgerichtet sind. Der Festigkeitsgewinn im Vergleich zum konventionellen Spritzguss liegt dabei m Bereich von 40 bis 100%, bevorzugt im Bereich von 50 bis 80%.

Erfindungsgemäß wird ein Werkzeug verwendet, bei dem mindestens eine Werkzeugwand ein zusätzliches beheizbares Element aufweist, das am Angussort beginnt und sich bis in den Bereich der Werkzeugwand fortsetzt, in dem die Faserorientierung beeinflusst werden soll. Dieser Bereich der Werkzeugwand korreliert mit dem Ort (oder Orten) der höchsten Spannung(en) im Bauteil, wenn dieses anwendungsspezifisch Belastungen ausgesetzt wird. Bevorzugt wird das beheizbare Element von diesem Bereich aus weitergeführt bis zu einer Überlaufkavität, die sich an die Werkzeugkavität anschließt. In Bezug auf die Fläche der jeweiligen Werkzeugwand nimmt dieses zusätzliche Heizelement weniger als 50%, bevorzugt weniger als 30% und insbesondere bevorzugt weniger als 20% ein. Die Breite des Heizelementes ist typischerweise zwischen 0.5 und 10 mm und kann über den Verlauf in der Werkzeugwand konstant oder variabel sein. In der Länge beschreibt das Heizelement einen Weg auf der Oberfläche der Werkzeugwand, der frei wählbar ist und bevorzugt vom Anguss bis zur Überlaufkavität erstreckt. Der Verlauf des mindestens einen Zusatzheizelementes in der Werkzeugwand ist der jeweiligen Aufgabe entsprechend auszulegen. Diese zusätzliche Heizung sorgt dafür, dass am Ende der Druckhaltephase bzw. Füllphase die Kunststoffformmasse in der Werkzeugkavität in einem Bereich oberhalb der Heizung, dem sogenannten variotherm beheizbaren Kanal, noch fließfähig ist, während die übrige Formmasse bereits erstarrt oder zu mindestens hochviskos vorliegt.

Dabei kommt dem variotherm beheizbaren Kanal zu Beginn des Einspritzens noch keine große Bedeutung zu, sondern die Schmelze wird in einer Art und Weise in die Kavität gedrückt, die praktisch nicht vom konventionellen Spritzguss zu unterscheiden ist. Erst gegen Ende der Druckhaltephase, wenn außerhalb der Bereiche des variotherm beheizbaren Kanals die Schmelze bereits erstarrt, fließt ein Schmelzestrom gezielt durch die Bereiche der Werkzeugkavität, die durch das zusätzliche Heizelement in der Werkzeugwand erwärmt werden und zwar insbesondere bis in die Überlaufkavität. Durch diesen Schmelzefluss resultiert eine hohe Faserorientierung entlang der variotherm beheizbaren Kanäle.

Durch die gegenüber der konventionellen Spritzgießverfahren veränderte Faserorientierung in Richtung der Hauptspannungsachse des Formteils, wird die Festigkeit bis zum Bruch um bis zu 100% verbessert.

Da das Verfahren mit den variotherm beheizbaren Kanälen eine sehr lokale Erwärmung und hohe Designfreiheit erfordert, wird zur Beheizung der Kanäle die Dickfilmheiz-Technologie bevorzugt eingesetzt.

Das Verfahren zur Herstellung von verstärkten Formteilen kann z.B. derart erfolgen, dass eine Kunststoffformmasse mit Faserverstärkung (bevorzugt 20 - 70 Gew.-%) in eine Werkzeugkavität eingespritzt wird, wobei mindestens eine Wand des Werkzeugs mindestens ein zusätzliches Heizelement aufweist, das in seiner gesamten Ausdehnung weniger als 50% der Wandfläche beheizt, und auf die Oberfläche der Werkzeugwand projektiert die Form eines 0.5 - 10 mm breiten Bandes besitzt, welches sich vom Angussort bis zum Ort der Überlaufkavität erstreckt und das Werkzeug mit Ausnahme der Bereiche mit zusätzlichem Heizelement auf eine Temperatur unterhalb der Erstarrungstemperatur des Kunststoffes temperiert und diese Temperatur während des gesamten Spritzgusszykluses nahezu konstant gehalten wird (bevorzugte Temperaturführung (1)), sowie die Werkzeugbereiche oberhalb der zusätzlichen Heizelement während es Einspritz- und der Druckhaltephase auf eine Temperatur oberhalb der Erstarrungstemperatur des Kunststoffes gehalten werden, so dass geschmolzene Kunststoffformmasse am Ende der Druckhaltephase nur noch innerhalb der variotherm beheizbaren Kanäle fließen kann, und sich die überschüssige Schmelze in die Überlaufkavität ergießt.

Dabei weicht der Verlauf des mindestens einen zusätzlichen Heizelementes wenigstens in einem Bereich von der Richtung des anfänglichen Schmelzflusses, also dem durch den Angussort bedingten Richtung des Schmelzestromes, ab.

Bezeichnungen in den Figuren:

D:   Durchbruch im Bauteil
F:   Kraft, die an das Bauteil angelegt wird
K:   Kavität des Spritzgusswerkzeuges
A:   Angussort
WL:  Bindenaht
VK:  Variothermer Kanal
ÜW:  Übrige Werkzeugwand

F1:  Zulauf; Teil des variothermen Kanals, der die Kunststoffschmelze dem kreisförmig um den Durchbruch D führenden variothermen Kanal zuführt
F2:  Ablauf; Teil des variothermen Kanals, der die Kunststoffschmelze aus dem kreisförmig um den Durchbruch D führenden variothermen Kanal aufnimmt und dem Überlauf ÜL zuführt
ÜL:  Überlauf
ÜK:  Überlaufkavität
HR:  Heisskanal

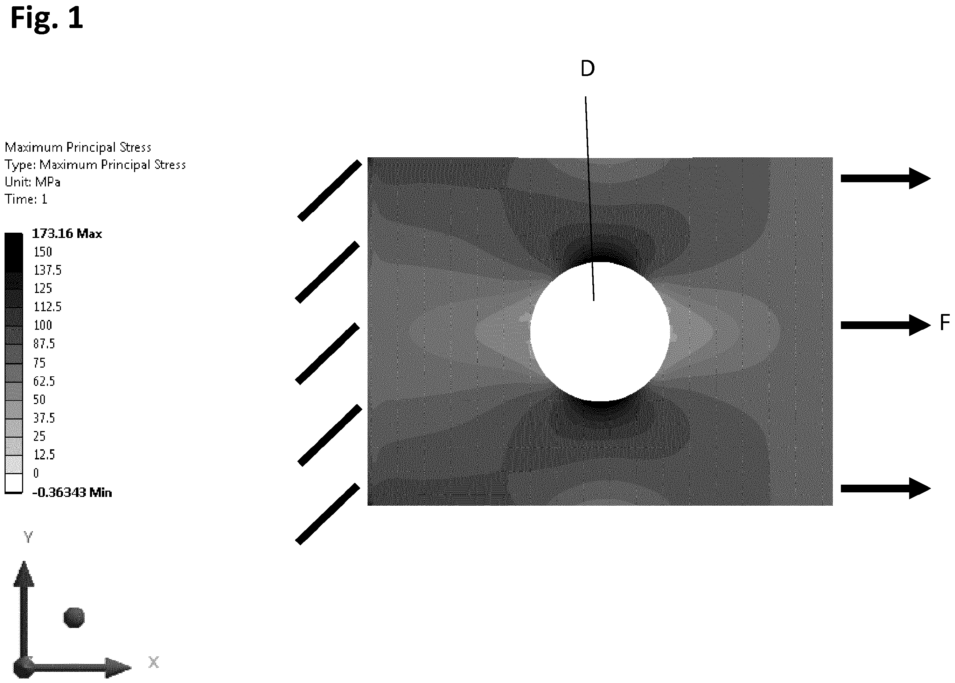

Figur 1 zeigt ein beispielhaftes spritzgegossenes Bauteil von rechteckiger Gestalt, das exemplarisch für die folgenden Untersuchungen herangezogen wird. Das Bauteil weist dabei eine Länge von 100 mm, eine Breite von 75 mm sowie eine in die Bildrichtung hineinragende Dicke von 3 mm auf. In der Mitte dieses Bauteils ist ein kreisförmiger Durchbruch D eingelassen, der einen Durchmesser von 30 mm aufweist

Figur 1 zeigt die im Bauteil auftretende Spannungsverteilung, wenn eine Kraft F (im Beispielsfalle 10 kN) in Längsrichtung an das Bauteil angelegt wird. Dabei wird das Bauteil auf einer Seite fixiert (in der Figur 1 ist dies die linke Seite).

Erkenntlich ist, dass die größten Spannungskräfte direkt an der Bohrung, senkrecht zur Zugrichtung auftreten. Insbesondere diese Stellen prädisponieren somit mögliche Bruchstellen innerhalb dieses Bauteils.

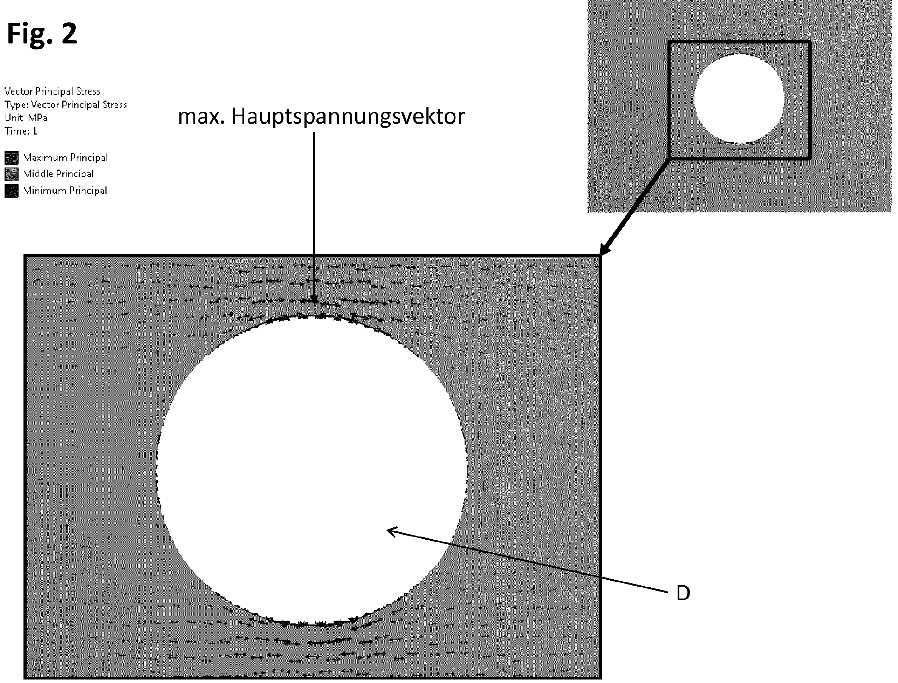

Die vektorielle Spannungsverteilung am selben Bauteil ist z.B. auch in Figur 2 dargestellt. In Figur 2 wird die am jeweils dargestellten Ort vorherrschende Spannung hinsichtlich ihrer prinzipiell wirkenden Komponente (Pfeilrichtung) sowie ihres Betrages (Pfeilgröße) symbolisiert..

Die Untersuchungen an dem Bauteil gemäß Figuren 1 und 2 (wie auch bei allen weiteren, in den Figuren 3 bis 15 dargestellten Untersuchungen) wurden dabei mittels eines Simulationsverfahrens (Finite Elemente Methode) bestimmt anhand einer Formmasse bestehend aus einem Polyamid 6T/6I (Molverhältnis: 70:30) verstärkt mit 50 Gew.-% Glasfasern mit rundem Querschnitt (Querschnittsdurchmesser: 10 $\mu$m, Länge: 200 $\mu$m), das einen Schmelzpunkt von 325 °C aufweist, bestimmt.

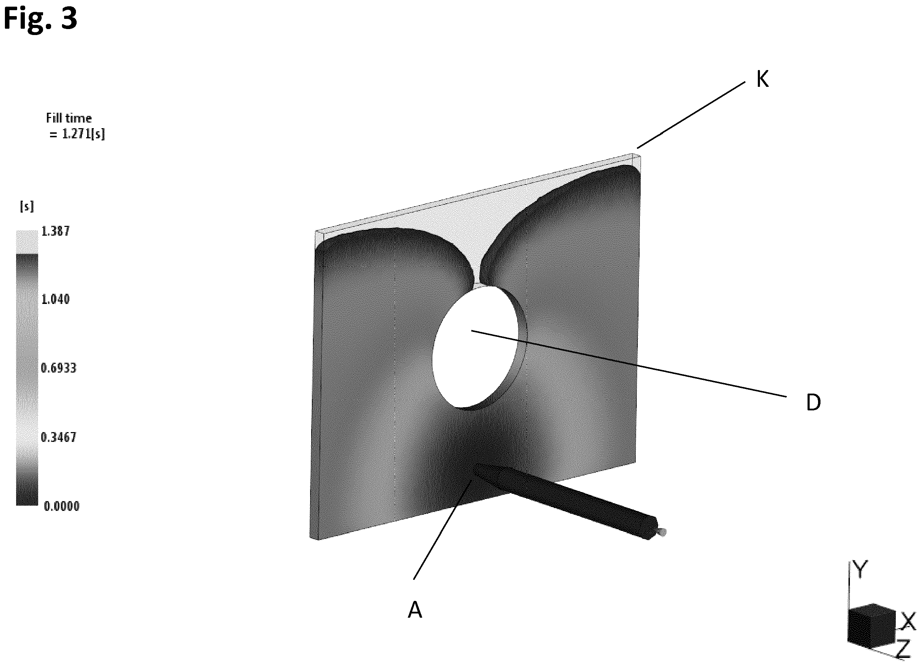

Figur 3 stellt schematisch ein Spritzgussverfahren zur Herstellung eines Formteils gemäß den Figuren 1 und 2 dar, wie es aus dem Stand der Technik bekannt ist. Hierbei wird eine Kavität K über einen Angussort A mit einer im geschmolzenen Zustand befindlichen thermoplastischen Formmasse, die beispielsweie Glasfasern enthält, befüllt. In Figur 3 ist ein Zustand dargestellt, die die Kavität K noch nicht vollständig mit der thermoplastischen Formmasse gefüllt ist und in dem die thermoplastische Formmasse vom Angussort A aus bereits den Durchbruch D teilweise umflossen hat. Die jeweiligen Fließfronten der thermoplastischen Formmasse sind dabei noch nicht vollständig um den Durchbruch D herum zusammengeflossen, der Zusammenfluss steht in dem in Figur 3 dargestellten Zustand allerdings unmittelbar bevor.

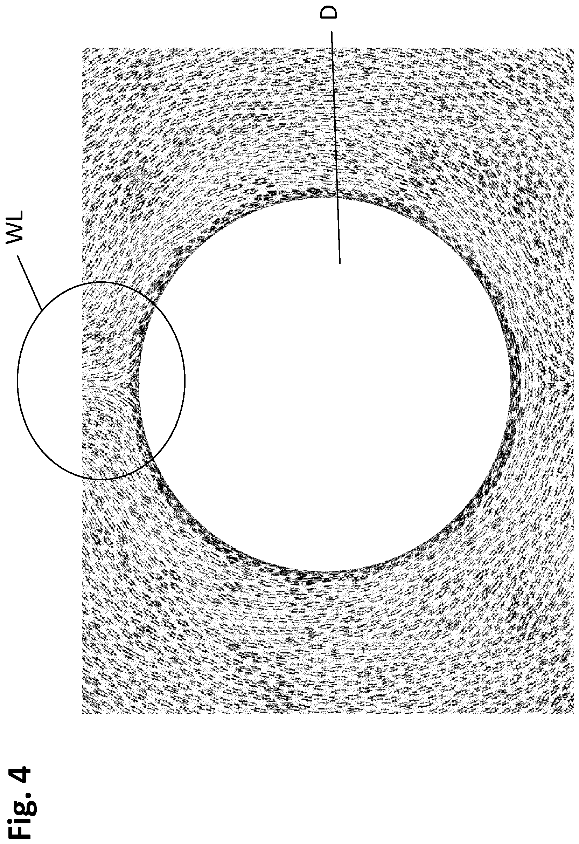

Figur 4 zeigt das Endprodukt des in Figur 3 (gleicher Ausschnitt wie in Figur 2) dargestellten Spritzgussvorgangs. Nach vollständigem Befüllen der Kavität K der Spritzgussform wird dabei ein Formteil erhalten, das in dem Bereich, in dem die beiden in Figur 3 dargestellten Fronten der thermoplastischen Formmasse nach Zusammenschluss eine Bindenaht WL erzeugen. In Figur 4 ist dabei die Ausrichtung der in der thermoplastischen Formmasse enthaltenen Verstärkungsfasern wiedergegeben. Erkennbar ist, dass die Verstärkungsfasern (in diesem Fall Glasfasern) in dem Bereich WL anisotrop verteilt sind und vom Durchbruch D wegführen. Dort wo die beiden Fliessfronten aufeinander treffen sind die Glasfasern parallel zueinander ausgerichtet.

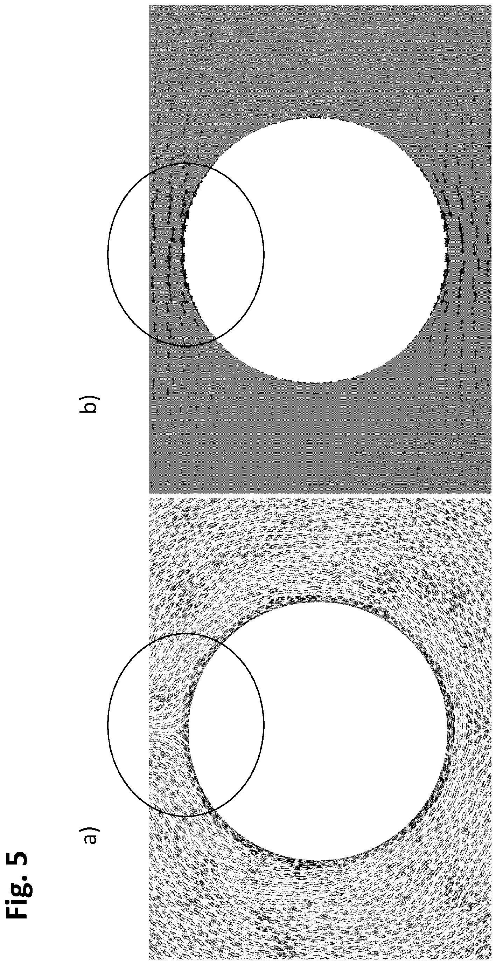

Eine derartige Verteilung der Glasfasern innerhalb des Formteils ist allerdings äußerst nachteilig. Dies wird anhand der beiden Gegenüberstellung der Figuren 5a und 5b illustriert. Während Figur 5a die verkleinerte Darstellung der Figur 4 ist, entspricht Figur 5b der verkleinerten Darstellung der Figur 2. Erkennbar ist, dass die resultierende Faserverteilung im Bereich der Bindenaht WL wirkungslos ist, um die in diesem Bereich auftretenden größtmöglichen Zugspannung aufzunehmen. Hierfür wäre eine Faserverteilung entlang bzw. parallel zu den Zugkräften notwendig. Dies ist mit einem herkömmlichen Spritzgussverfahren allerdings nicht erzielbar. Beim konventionellen Verfahren ergibt sich eine im Wesentlichen zur Zugspannung senkrechte Orientierung der Glasfasern bzw. Verstärkungsfasern. Der Bereich der Bindenaht WL ist somit ungeeignet, die anfallenden Zugkräfte aufzunehmen und stellt somit eine Sollbruchstelle im erhaltenen Formteil dar.

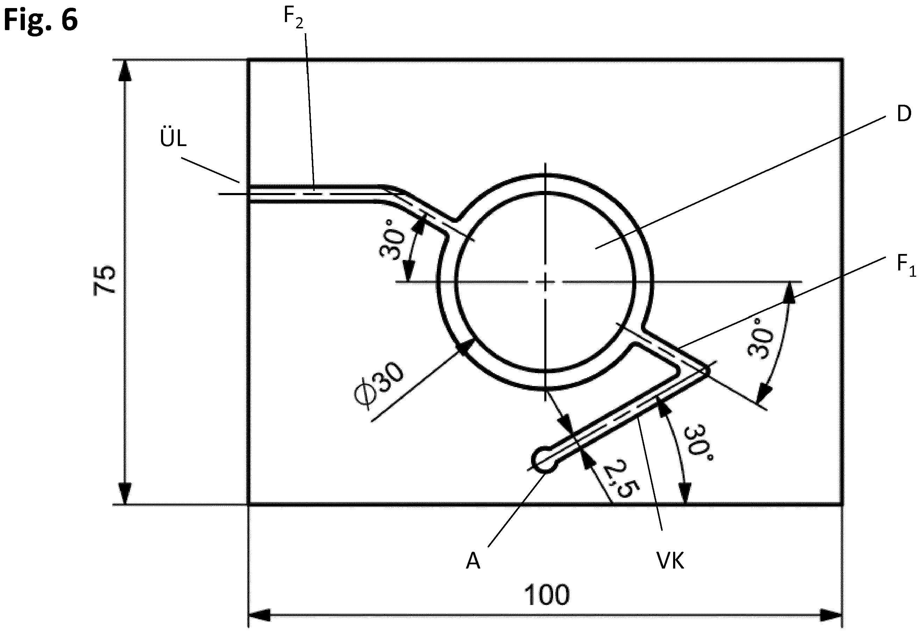

In Figur 6 ist ein Ausführungsbeispiel einer erfindungsgemäßen Spritzgussform schematisch dargestellt, mit der eine gezielte anisotrope Verteilung der Verstärkungsfasern, beispielsweise Glasfasern im Bauteil ermöglicht werden kann. Die Spritzgussform ist dabei mit Blick auf die Seite des Spritzgusswerkzeugs (Düsenseite), das die Längs- und Breitseite des Formbauteils ermöglicht. Die Tiefendimension, d.h. die Dicke des Bauteils ist dabei in Übereinstimmung mit den voranstehenden Figuren in die Tiefe gehend dargestellt.

Das Spritzgusswerkzeug weist dabei einen Durchbruch D auf, mit dem auch der Durchbruch im entsprechend herzustellenden Formteil realisiert werden kann. Mit einem derartigen Spritzgusswerkzeug ist der Form nach ein identisches Bauteil herstellbar, wie in den Figuren 1 bis 5 dargestellt.

In mindestens eine der die Kavität dieses Spritzgusswerkzeugs begrenzenden Wandungen, in diesem Fall in beide Wandungen, d.h. in die Vorderseite (Düsenseite, dies ist die Seite, an der auch der Angussort befindlich ist) und Rückseite (Auswerferseite), ist ein variotherm beheizbarer Kanal VK eingelassen, mit dem die die Kavität des Spritzgusswerkzeugs begrenzende Wandung lokal beheizt werden kann. Im in Figur 6 dargestellten beispielhaften Falle beginnt der variotherm beheizbare Kanal VK am Angussort A, über den die Kavität mit der thermoplastischen Formmasse befüllt werden kann. Der Angussort ist dabei identisch gewählt, wie in Figur 3 dargestellt. Der variotherm beheizbare Kanal ist dabei 2,5 mm breit gewählt und weist im in Figur 6 dargestellten Fall über den gesamten Verlauf die gleiche Breite auf. Der variotherm beheizbare Kanal ist in Figur 6 vom Angussort aus gesehen nach rechts oben ansteigend geführt, der hierbei eingehaltene Winkel zur Längsseite des Spritzgusswerkzeugs beträgt dabei beispielsweise 30°. Der variotherm beheizbare Kanal VK wird danach in eine Zuführung $F_1$ umgelenkt, diese Zuführung $F_1$ läuft dabei auf den Durchbruch D zu. Der variotherm beheizbare Kanal ist dabei kreisförmig um den gesamten Durchbruch herum ausgebildet und läuft in der Abführung $F_2$ zusammen. Zulauf $F_1$ und Ablauf $F_2$ sind dabei genau gegenüberliegend angeordnet. Der variotherm beheizbare Kanal wird somit im Bereich des Durchbruchs D verzweigt und ringförmig um den Durchbruch D herumgeführt. Der variotherm beheizbare Kanal VK ist dabei bis zu einer Überlauföffnung ÜL geführt, die in der Wandung des Spritzgusswerkzeugs eingebracht ist (vorzugsweise die Schmalseite), anhand derer überschüssige thermoplastische Formmasse aus dem Spritzgusswerkzeug austreten kann. Mit einem derartigen Spritzgusswerkzeug lässt sich das erfindungsgemäße Verfahren, wie nachfolgend im Detail beschrieben, durchführen. Die für diese Spritzgussform getroffenen Aussagen gelten auch für alle nachfolgenden Ausführungen.

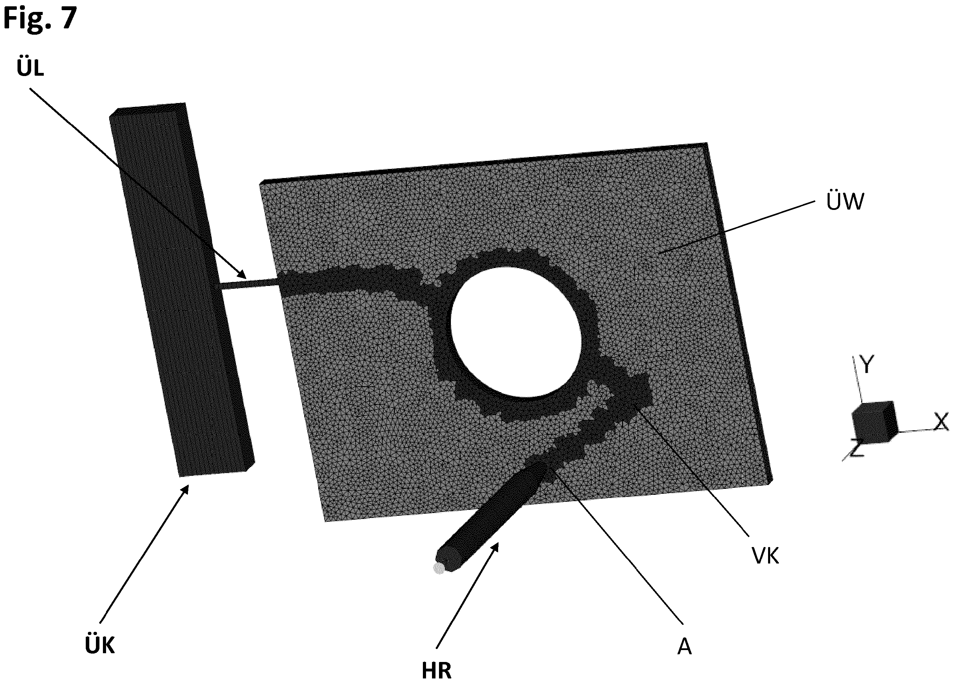

Figur 7 zeigt das identische Spritzgusswerkzeug wie in Figur 6 dargestellt, hierbei ist an der Überlauföffnung ÜL eine Überlaufkapazität ÜK angeordnet, die ein Auffangreservoir für die thermoplastische Formmasse darstellt. Am Angussort des Spritzgusswerkzeugs ist ein sogenannter Heisskanal "(Hot-Runner", HR) angebracht, über den die thermoplastische Formmasse in das Spritzgusswerkzeug aufgegeben werden kann. Der variotherme Kanal VK ist dabei im Vergleich zum übrigen Bereich des Spritzgusswerkzeugs in dunkler Farbe dargestellt. Der Verlauf ist dabei identisch mit dem in Figur 6 dargestellten Verlauf.

Hierbei werden die nachfolgenden Annahmen zugrunde gelegt:

**Verstärkungsfasern enthaltende Formmasse:**

Polyamid 6T/6I (70:30) mit Glasfaserfüllung (Füllgrad 50 Gew.-%, Glasfaserdurchmesser: 10 $\mu$m, Glasfaserlänge im Bauteil: 200 $\mu$m), Schmelzpunkt: 325 °C), Kristallisationstemperatur: $\vartheta_K$ = 285 °C, MVR (340 °C/21.6 kg) = 100 cm³/10 min, Schmelzviskosität (340 °C, Scherrate von 1000 Hz) = 230 Pas.

**Verfahrensparameter:**

■ Temperatur der übrigen Werkzeugwand: $\vartheta_W$ = 150 °C

■ Temperatur der Formmasse beim Füllen und Überbefüllen: $\vartheta_{FM}$ = 340 °C.

■ Temperatur des variothermen Kanals entlang der Trajektorie während des Füllens und Überbefüllens in der Nachdruckphase: $\vartheta_{VT}$ = 305 °C,

■ Einspritzgeschwindigkeit (Fließrate) während des Füllens: 15 cm³/s

■ Umschaltungspunkt auf Nachdruck: Sobald ein Spritzdruck von 25 MPa erreicht wird, wird von der Fliessraten geregelten Füllung auf Druckregelung umgeschaltet.)

■ Nachdruck im ersten Teil der Nachdruckphase: für 10 Sekunden wird ein Druck von 60 MPa aufrechterhalten

■ Nachdruck im zweiten Teil der Nachdruckphase: Für 6 Sekunden wird ein Druck von 120 MPa angelegt, wobei die Kunststoff-Schmelze (Formmasse) entlang Trajektorie in die Überlaufkavität gedrückt wird.

■ Nachdruck im dritten Teil der Nachdruckphase: Für 1 Sekunde wird ein Druck von 2.5 MPa angelegt (insgesamt dauert die Nachdruckphase 17 Sekunden)

■ Füllzeit: 1.6 Sekunden (99% Volumenfüllung ohne Überlaufkavität)

■ Einspritzdruck bei 99% Volumenfüllung: 25MPa

■ Volumen der Überlaufkavität: 8.8 cm³ (wird während dem zweitem Teil der Nachdruckphase gefüllt)

■ Volumen der Kavität: 20.38 cm³

■ Volumenanteil der Kavität, der überbefüllt wird: 43.2%

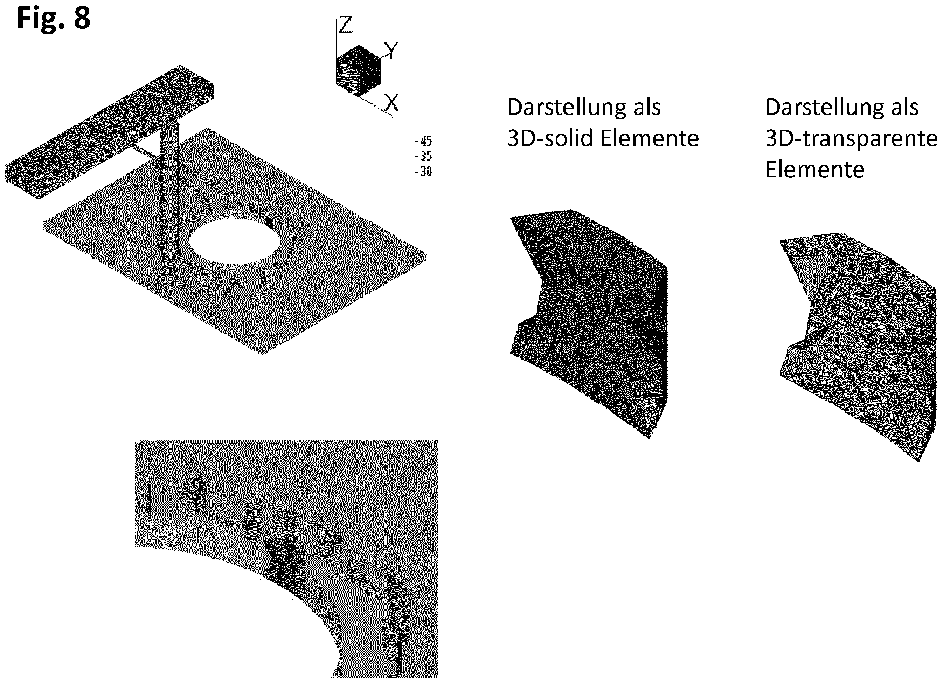

Für die nachfolgenden Simulationsrechnungen wurde das Volumen der Kavität des Spritzgusswerkzeugs in ein Grid unterteilt, das bereits in Figur 7 dargestellt ist. Die einzelnen Volumenelemente, die für das Grid herangezogen werden, sind im Detail in Figur 8 dargestellt.

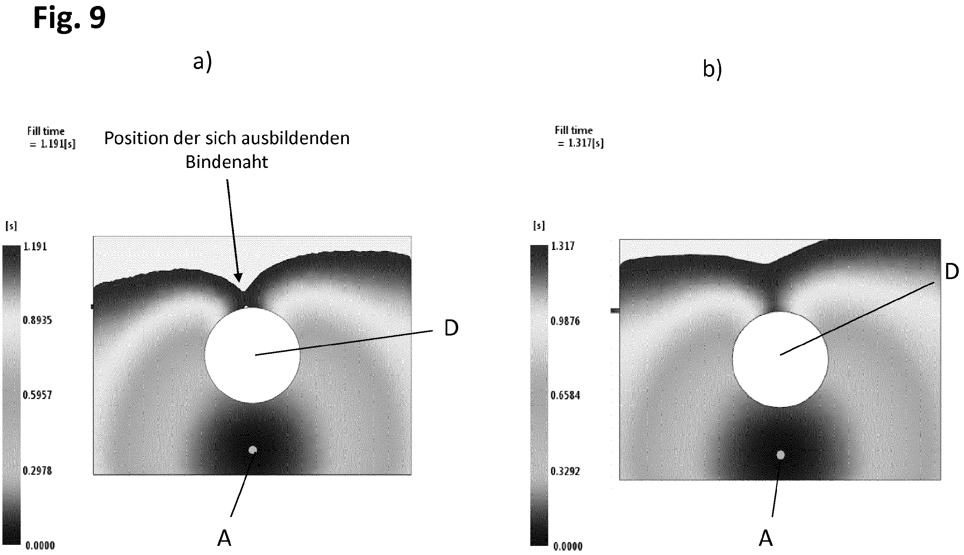

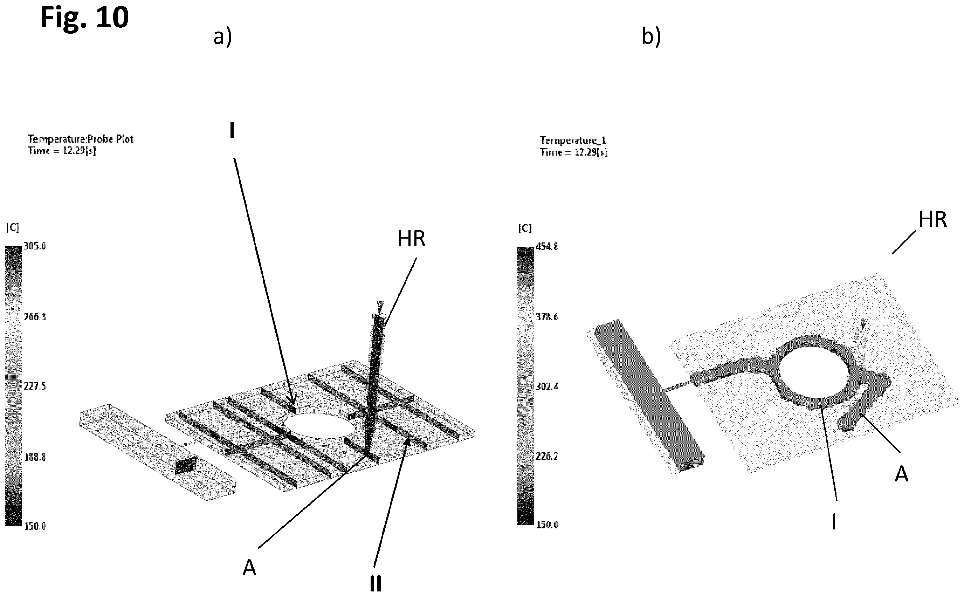

Figur 9 zeigt den simulierten Vergleich des Befüllens einer identischen Spritzgussform nach einem Verfahren nach dem Stand der Technik (Figur 9a), wie es in Figur 3 dargestellt wurde. In Figur 9b ist der Befüllvorgang mit einem erfindungsgemäßen Spritzgusswerkzeug, wie in den Figuren 6 bzw. 7 dargestellt, skizziert. Erkennbar ist, dass das Füllverhalten der Spritzgussform mit der thermoplastischen Formmasse im Wesentlichen identisch ist. Auch beim Spritzgussverfahren mit der erfindungsgemäßen Spritzgussform (vgl. Figur 9b)) findet ein Umfließen des Durchbruchs D statt, auch hier findet ein Zusammenfließen der thermoplastischen Formmasse auf der im Angussort A abgewandten Seite des Durchbruchs D statt. In den Figuren 10a) und 10b) sind Temperaturprofile dargestellt, die innerhalb der thermoplastischen Formmasse während des Spritzgussvorgangs auftreten. In Figur 10a) sind verschiedene Schnittprofile dargestellt, die unmittelbar nach vollständigem Befüllen der Spritzgussform bzw. beim Überbefüllen der Spritzgussform vorhanden sind. An den Bereichen, an denen eine beidseitige Temperierung der Spritzgussform mittels des variotherm beheizbaren Kanals (in Figur 10a)) nicht dargestellt) erfolgt, ist ersichtlich, dass die Temperatur oberhalb der Schmelz-übergangstemperatur liegt (dies sind die in Figur 10a) dargestellten Bereiche I). An den übrigen Bereichen (Bereiche II) liegt die Temperatur der thermoplastischen Formmasse dabei bereits unterhalb der Schmelzübergangstemperatur. Nach vollständigem Befüllen der Spritzgussform sind somit lediglich die Bereiche, an denen eine Temperierung über den variotherm beheizbaren Kanal erfolgt ist, noch in schmelzflüssigem Zustand befindlich, d.h. durch weiteres Einspritzen von thermoplastischer Formmasse über den Hot-Runner HR. Am Angussort A kann dabei ein gezielter Fluss von thermoplastischer Formmasse direkt an den Stellen erfolgen, an denen der oder die variotherm beheizbaren Kanäle ausgebildet sind.

In Figur 10b) ist eine Umhüllende dargestellt (ein sogenannter Konturplot), an der die Temperatur der thermoplastischen Formmasse im gewählten Beispiel noch 305 °C beträgt. Erkennbar ist, dass diese Bereiche ausschließlich an den Stellen vorliegen, an denen die variotherm beheizbaren Kanäle ausgebildet sind. In den übrigen Bereichen des Spritzgusswerkzeugs werden ohne zusätzliche Beheizung diese Werte nicht erreicht, die Temperatur in diesen Bereichen beträgt dabei ca. 150 °C.

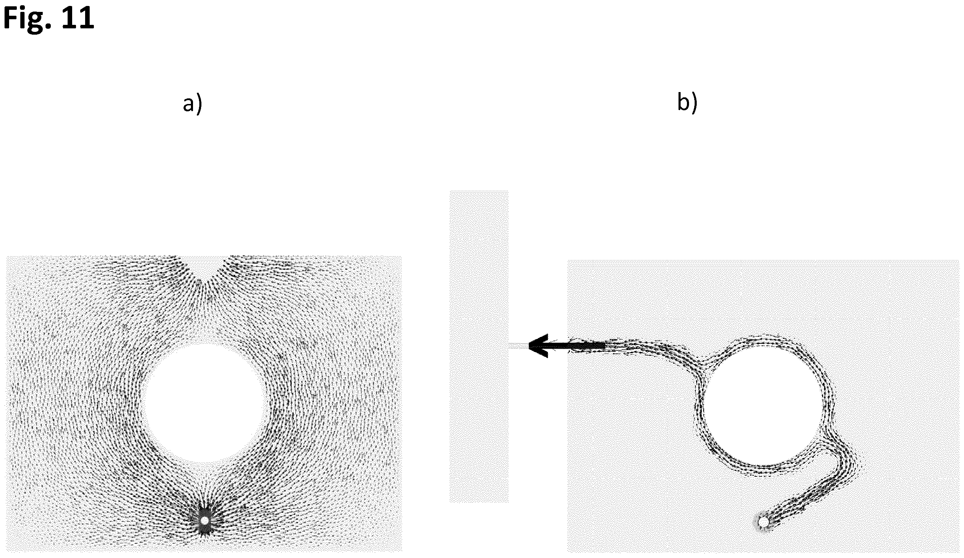

In den Figuren 11 ist der Geschwindigkeitsplot dargestellt, den die thermoplastische Formmasse innerhalb der Kavität des Spritzgusswerkzeugs innehat. Hierbei ist das Geschwindigkeitsprofil vektuell dargestellt, die Pfeile geben dabei die Flussrichtung an, die Länge der Pfeile entspricht dabei der Geschwindigkeit.

In Figur 11a) ist das Geschwindigkeitsprofil einer Spritzgussform ohne variotherm beheizbaren Kanal dargestellt. Erkennbar ist, dass die Strömungsrichtung der thermoplastischen Formmasse im Wesentlichen symmetrisch erfolgt, bis das Spritzgusswerkzeug vollständig befüllt ist.

In Figur 11b) ist die Situation dargestellt, die sich bei teilweise Überbefüllung des Spritzgusswerkzeugs einstellt. Ersichtlich ist, dass ein Fluss von thermoplastischer Formmasse ausschließlich noch in den variotherm beheizbaren Bereichen erfolgt, dabei folgt der Fluss der thermoplastischen Formmasse im Wesentlichen entlang der vorgegebenen Trajektorie durch den variotherm beheizbaren Kanal.

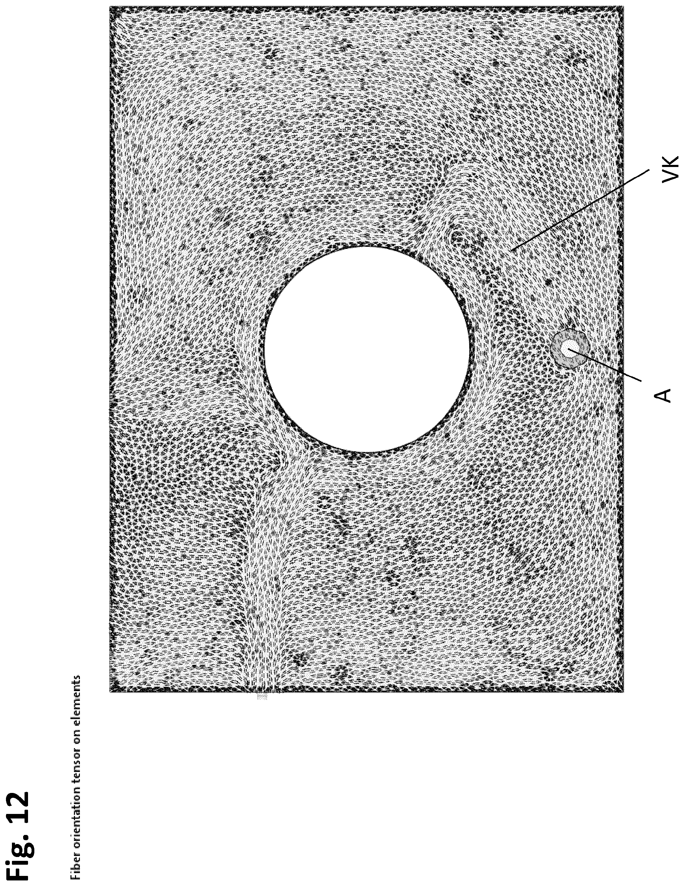

In Figur 12 ist die Faserverteilung wiedergegeben, die sich bei der Durchführung des erfindungsgemäßen Verfahrens ergibt. Erkennbar ist, dass die Faserverteilung im Bereich des variothermen Kanals im Wesentlichen anisotrop ausgebildet ist und die Trajektorie des variotherm beheizbaren Kanals folgt.

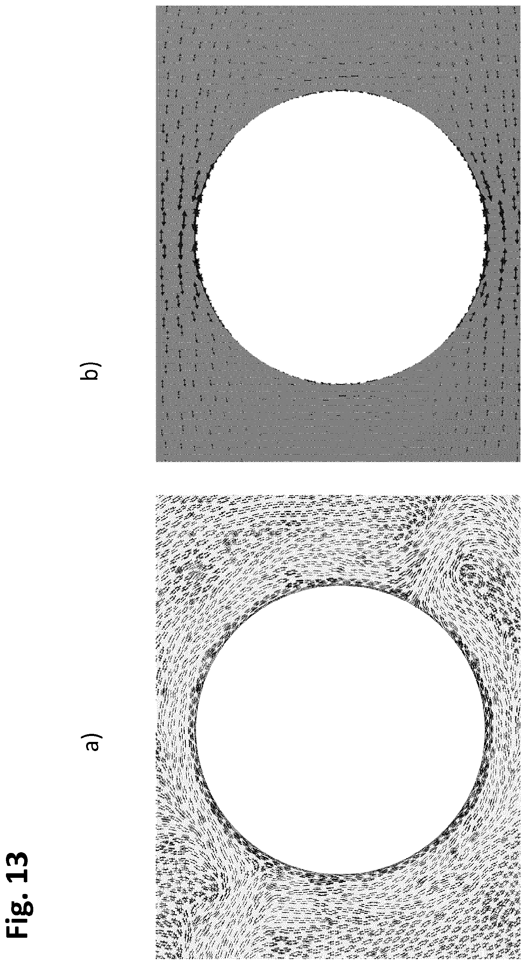

In den Figuren 13a) und 13b) sind, in Analogie zu den Figuren 5a) und 5b) nochmals die Zugkräfte, die im hergestellten Formteil bei Zugbelastung auftreten und die Faserverteilung in einem gemäß dem erfindungsgemäßen Verfahren hergestellten Bauteil gegenübergestellt. Erkennbar ist, dass die Faserorientierung (13a) gerade an den Stellen, an denen die höchsten Zugkräfte (13b) auftreten, exakt entlang der Zugkräfte erfolgt. Die Fasern können somit optimal die auftretenden Zugspannung aufnehmen.

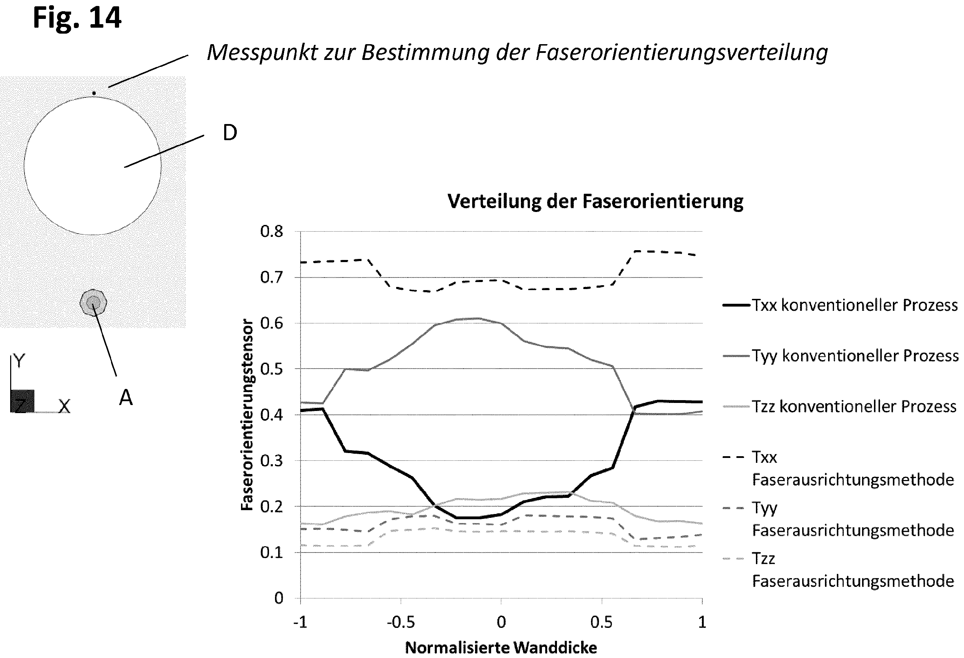

In Figur 14 ist die Faserverteilung wiedergegeben, die beim erfindungsgemäßen Verfahren, hier Faserausrichtungsmethode genannt, auftritt. Die Berechnung der Faserverteilung erfolgt dabei an einer Stelle, die gegenüber des Angussortes im Bereich des variotherm beheizbaren Kanals erfolgt. Der Bestimmungsort ist dabei durch den schwarzen Punkt in der schematischen Abbildung in Figur 14 links dargestellt. An diesem Ort stimmt das lokale Koordinatensystem, d.h. die betrachtete x-Komponente, die sich durch die Tangente der Trajektorie des variothermen Kanals ergibt, mit der Hauptzugbelastungsrichtung des Bauteils überein. Erkennbar ist, dass mit einem herkömmlichen Herstellungsverfahren eine hinsichtlich der Faserorientierung in x- bzw. y-Richtung im Wesentlichen isotrope Faserverteilung erfolgt. Die Fasern sind an dieser Stelle hauptsächlich in y-Richtung orientiert, während eine entsprechende Orientierung der Fasern in x-Richtung nur von untergeordneter Bedeutung ist.

Wie aus Figur 14 weiter ersichtlich ist, kann mit dem erfindungsgemäßen Verfahren erreicht werden, dass die Faserverteilung in x-Richtung deutlich überhand nimmt, d.h. die Fasern an der gemessenen Stelle in x-Richtung eine deutliche anisotrope Verteilung aufweisen und dort der Hauptteil der Fasern in überwiegend der x-Richtung aufweist. Somit sind die Fasern an dieser Stelle optimal ausgerichtet, um die auftretenden Zugkräfte im Bauteil aufzunehmen.

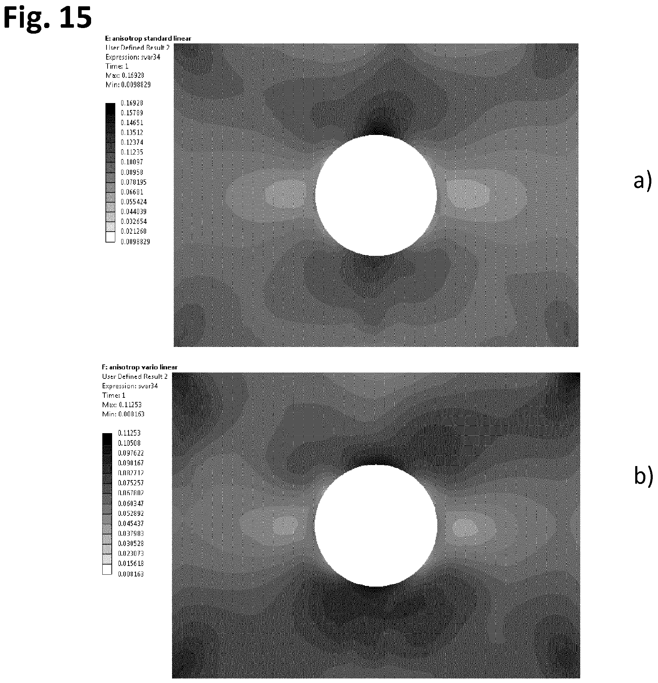

Figur 15 stellen Testresultate eines Simulationsversuches an Bauteilen, die voranstehend gemäß dem Stand der Technik hergestellt wurden (Figur 15a)) sowie dem erfindungsgemäßen Verfahren hergestellt wurden (Figur 15b)). Bei diesem Versuch wird eine Zugbelastung von 1350 N an die Schmalseiten der Formteile angelegt und die Formteile mit der angegebenen Kraft, wie in Figur 1 dargestellt, beaufschlagt.

Die Variante Standard gemäß Fig. 15a mit Bindenaht und die Variante Variotherm mit durchgespülter Bindenaht gemäß Fig. 15b wurden mit Hilfe von Finite Elemente (FE)Berechnungen miteinander verglichen. Dabei wurden die FE-Berechnungen unter Berücksichtigung der Faserorientierung aus der Spritzgusssimulation und eines anisotropen Materialmodells mit Versagenskriterium durchgeführt. Das Modell der Platte mit Loch (Abmessungen 100x75x3mm mit Durchmesser 30mm) wurde an der einen Seite in alle Richtungen festgehalten, wohingegen auf der gegenüberliegenden Seite eine Kraft normal zur Fläche nach aussen aufgebracht wurde. Die Berechnungen zeigen ein Versagen des Modells der Variante Standard mit Bindenaht bei 7'965N und bei der Variante Variotherm mit durchgespülter Bindenaht von 12'015N. Dies stellt eine Verbesserung von 51% dar.

Die beiden Bilder in Fig. 15 zeigen Farbplots des verwendeten Versagenskriteriums bei einer Belastung mit 1'350N. Die Legende zeigt dabei den Kehrwert des Sicherheitsfaktors. Daher bedeutet z.B. ein Wert von 0.112 eine Sicherheit gegen Versagen bei dieser Belastung von 1/0.112 = 8.9. Es wird deutlich, dass die Variante Standard mit Bindenaht als potentiellen Versagensbereich die Bindenaht aufweist, wohingegen die Variante Variotherm mit durchgespülter Bindenaht die Bindenaht nicht mehr erkennen lässt, sondern als potentielle Versagensbereiche die beiden Kerbbereiche des Lochs zeigt.

## Patentansprüche

1. Verfahren zur Herstellung von Formteilen aus Verstärkungsfasern enthaltenden thermoplastischen Formmassen mittels Spritzgusses, bei dem eine Kavität eines Spritzgusswerkzeugs mit einer auf eine vorgegebene Temperatur $\vartheta_{FM}$ erwärmten, in plastifiziertem Zustand befindlichen Verstärkungsfasern enthaltenden thermoplastischen Formmasse über einen Angussort überbefüllt wird, wobei die Kavität des Spritzgusswerkzeugs in mindestens einer Wandung mindestens einen entlang einer Trajektorie verlaufenden variotherm beheizbaren Kanal aufweist, vor, während und/oder nach dem Füllen des Spritzgusswerkzeugs der den mindestens einen variothermen Kanal der Wandung aufweisende Bereich des Spritzgusswerkzeugs auf eine Temperatur $\vartheta_{VT}$ und der übrige Bereich der Wandung des Spritzgusswerkzeugs permanent oder zumindest zeitweise auf eine Temperatur $\vartheta_W$ eingestellt wird, wobei gilt $\vartheta_W < \vartheta_{VT}$, nach Überbefüllen die Verstärkungsfasern enthaltende thermoplastische Formmasse bis zum Erstarren abgekühlt wird, und das erstarrte Formteil der Spritzgussform entnommen wird, wobei das Spritzgusswerkzeug mindestens eine Überlauföffnung aufweist und der mindestens eine variotherm beheizbare Kanal am Angussort des Spritzgusswerkzeugs beginnt und bis zur mindestens einen Überlauföffnung geführt ist.

2. Verfahren nach Anspruch 1, **dadurch gekennzeichnet, dass** die mindestens eine Überlauföffnung jeweils in einer Überlaufkavität endet, wobei die jeweilige Überlaufkavität über die jeweilige Überlauföffnung in fluidischer Kommunikation mit der Kavität des Spritzgusswerkzeugs steht, wobei der mindestens eine variotherm beheizbare Kanal am Angussort des Spritzgusswerkzeugs beginnt und bis zur mindestens einen Überlauföffnung geführt ist, so dass die thermoplastische Formmasse bei Überfüllung des Spritzgusswerkzeugs aus der Kavität des Spritzgusswerkzeugs aus- und über die mindestens eine Überlauföffnung in die jeweilige Überlaufkavität eintreten kann.

3. Verfahren nach einem der vorhergehenden Ansprüche, **dadurch gekennzeichnet, dass** die Überbefüllung des Spritzgusswerkzeugs derart erfolgt, dass 5 bis 100 Vol.-%, bevorzugt 10 bis 70 Vol.-% und besonders bevorzugt 15 bis 50 Vol.-% des Volumens der Kavität des Spritzgusswerkzeugs überfüllt werden,
nach vollständigem Befüllen eine Wartezeit von 2 bis 60 s eingehalten wird, bevor mit dem Überbefüllen begonnen wird, während der bevorzugt die Temperatur $\vartheta_{VT}$ im den mindestens einen variothermen Kanal der Wandung aufweisenden Bereich des Spritzgusswerkzeugs angehoben wird und/oder die Temperatur $\vartheta_W$ im übrigen Bereich der Wandung des Spritzgusswerkzeugs abgesenkt wird und/oder die Überfüllung über eine Zeitspanne von 2 bis 60 s andauert.

4. Verfahren nach einem der vorhergehenden Ansprüche, **dadurch gekennzeichnet, dass** durch die Einstellung der Temperaturdifferenz $\vartheta_W < \vartheta_{VT}$ eine Einstellung der Orientierung der Verstärkungsfasern in der thermoplastischen Formmasse erfolgt, wobei eine im Wesentlichen anisotrope Ausrichtung der Verstärkungsfasern entlang der Trajektorie des mindestens einen variotherm beheizbaren Kanals erreicht wird.

5. Verfahren nach vorhergehendem Anspruch, **dadurch gekennzeichnet, dass** die Ausrichtung der Verstärkungsfasern durch einen Orientierungstensor $(a_{ij})$ einer Gruppe von n in einem finiten Volumenelement enthaltenen Verstärkungsfasern definiert ist, mit

$$\left(a_{ij}\right) = \begin{pmatrix} a_{11} & a_{12} & a_{13} \\ \cdots & a_{22} & a_{23} \\ \cdots & \cdots & a_{33} \end{pmatrix}$$

dessen Elemente $a_{ij}$ wie nachfolgende definiert sind

$$a_{ij} = \frac{1}{n}\sum_{k=1}^{n} a_{ij}^k = \frac{1}{n}\left(\sum_{k=1}^{n} p_i^k\, p_j^k\right)$$

wobei die Orientierung der Fasern durch die Diagonalelemente $a_{11}$, $a_{22}$ und $a_{33}$ des Orientierungstensors $(a_{ij})$ bestimmt wird,

wobei $p_i^k$ bzw. $p_j^k$ jeweils die Komponenten eines

Vektors $\vec{p^k}$ der Länge 1, der parallel zur k-ten Faser verläuft, darstellen, wobei gilt

$$\vec{p^k} = \begin{pmatrix} p_1^k \\ p_2^k \\ p_3^k \end{pmatrix}$$

wobei der Vektor $\vec{p^k}$ in jedem betrachteten finiten Volumenelement des Bereichs des mindestens einen variotherm beheizbaren Kanals jeweils in einem lokalen Koordinatensystem angegeben wird, bei welchem

die x-Achse im jeweiligen betrachteten finiten Volumenelement jeweils tangential zur Trajektorie des mindestens einen variotherm beheizbaren Kanals festgelegt wird,
die y-Achse normal zu x orientiert ist und
die z-Achse normal zu x und y orientiert ist,

wobei eine im wesentlichen anisotrope Ausrichtung dann gegeben ist, wenn der Wert des Elements $a_{11}$ des Orientierungstensors $(a_{ij})$ in jedem gegebenen finiten Volumenelement zumindest 0,5, bevorzugt 0,5 bis 0,98, weiter bevorzugt 0,6 bis 0,95, weiter bevorzugt 0,65 bis 0,9, insbesondere 0,7 bis 0,85 beträgt.

6. Verfahren nach einem der vorhergehenden Ansprüche, **dadurch gekennzeichnet**, **dadurch gekennzeichnet, dass** gilt
$\vartheta_{VT} > \vartheta_G$ bzw. $\vartheta_{VT} > \vartheta_K$, bevorzugt $\vartheta_{VT} - \vartheta_G \geq 10$ K bzw. $\vartheta_{VT} - \vartheta_K \geq 10$ K, wobei $\vartheta_G$ die Glasübergangstemperatur von amorphen thermoplastischen Formmassen und $\vartheta_K$ die Kristallisationstemperatur von teilkristallinen thermoplastischen Formmassen bedeutet,
$\vartheta_{VT} = \vartheta_{FM} \pm 40$ K und/oder
$\vartheta_{VT} - \vartheta_W \geq 50$ K, bevorzugt $\vartheta_{VT} - \vartheta_W \geq 100$ K.

7. Verfahren nach einem der vorhergehenden Ansprüche, **dadurch gekennzeichnet, dass** der mindestens eine variotherm beheizbarer Kanal ein oder beidseitig der Kavität in der Wandung des Spritzgusswerkzeugs ausgebildet ist.

8. Verfahren nach einem der vorhergehenden Ansprüche, **dadurch gekennzeichnet, dass** die Summe der Fläche des mindestens einen variotherm beheizbaren Kanals 1 bis 50 %, bevorzugt 3 bis 30 %, besonders bevorzugt 4 bis 20 %, insbesondere 5 bis 10 % der inneren Oberfläche der Kavität des Spritzgusswerkzeugs ausmacht.

9. Verfahren nach einem der vorhergehenden Ansprüche, **dadurch gekennzeichnet, dass** das Spritzgusswerkzeug mindestens einen Durchbruch aufweist, der eine Aussparung im herzustellenden Formteil bedingt, wobei der Durchbruch beispielsweise rund, oval, n-eckig, wobei n eine natürliche ganze Zahl von 3 oder mehr ist, ausgebildet ist.

10. Verfahren nach vorhergehendem Anspruch, **dadurch gekennzeichnet, dass** mindestens ein variotherm beheizbarer Kanal vollständig oder zumindest bereichsweise umlaufend um den mindestens einen Durchbruch ausgebildet ist, bevorzugt um jeden Durchbruch ein- oder beidseitig der Kavität in der Wandung des Spritzgusswerkzeugs jeweils ein variotherm beheizbarer Kanal ausgebildet ist, der den jeweiligen Durchbruch einfasst.

11. Verfahren nach vorhergehendem Anspruch, **dadurch gekennzeichnet, dass** der mindestens eine vollständig oder zumindest bereichsweise umlaufend um den mindestens einen Durchbruch ausgebildete variotherme Kanal mindestens eine Fortsetzung in einer Zulaufrichtung und mindestens eine Fortsetzung in einer Ablaufrichtung aufweist, wobei bevorzugt die Fortsetzung in Zulaufrichtung bis zum Angussort des Spritzgusswerkzeugs fortgeführt ist und/oder die Fortsetzung in Ablaufrichtung bis zur mindestens einen Überlauföffnung fortgeführt ist.

12. Verfahren nach vorhergehendem Anspruch, **dadurch gekennzeichnet, dass** die Fortsetzung in Zulaufrichtung und die Fortsetzung in Ablaufrichtung in Projektion des Durchbruchs versetzt zueinander angeordnet sind, bevorzugt um mindestens 120° versetzt zueinander angeordnet sind, insbesondere um 180° ± 10° versetzt zueinander angeordnet sind.

13. Verfahren nach einem der beiden vorhergehenden Ansprüche, **dadurch gekennzeichnet, dass** das herzustellende Formteil im Gebrauch eine Hauptzugbelastungsrichtung aufweist, wobei jeweils die Fortsetzung in Zulaufrichtung und die Fortsetzung in Ablaufrichtung unabhängig voneinander in Projektion des Durchbruchs eine Richtung aufweisen, die maximal 60°, bevorzugt maximal 50°, weiter bevorzugt maximal 40°, insbesondere maximal 30° von der Hauptzugbelastungsrichtung abweichen.

14. Verfahren nach einem der vorhergehenden Ansprüche, **dadurch gekennzeichnet, dass**

a) die thermoplastische Formmasse mindestens ein thermoplastisches Matrixpolymer oder ein Gemisch aus mindestens zwei thermoplastischen Matrixpolymeren, in dem die Verstärkungsfasern dispergiert vorliegen, beinhaltet oder hieraus besteht, wobei das mindestens eine Matrixpolymer bevorzugt ausgewählt ist aus der Gruppe bestehend aus Polyamiden, einschliesslich Polyamidimid, Polyetheramid und Polyesteramid; Polycarbonaten; Polyolefine, insbesondere Polyethylen, Polypropylen und Polystyrol oder Polyvinylchlorid (PVC); Polyacrylaten, insbesondere Polyacrylsäureester, wie z.B. Polymethyl(meth)acrylat; Acrylnitril-Butadien-Styrol-Copolymerisat, Acrylnitril-Styrol-Copolymer; Polyestern, insbesondere Polyethylenterephthalat, Polybutylenterephthalat oder Polycyclohexylenterephthalat, Polysulfonen (insbesondere des Typs PSU, PESU, PPSU), Polyphenylensulfid; Polyethern, insbesondere Polyoxymethylen, Polyphenylenether und Polyphenylenoxid; flüssigkristallinen Polymeren; Polyetherketonen; Polyetheretherketonen; Polyimiden; Polyesterimiden, Polyetheresteramiden; Polyurethanen, insbesondere des Typs TPU oder PUR; Polysiloxanen; Zelluloid sowie Mischungen oder Kombinationen hieraus,
b) die Verstärkungsfasern ausgewählt sind aus der Gruppe bestehend aus Glasfasern, Carbonfasern und Titanwhiskers, insbesondere mit rundem oder abgeflachtem Querschnitt und/oder mit einer Länge von 0,2 bis 20 mm und/oder einem Durchmesser von 5 bis 20 $\mu$m und/oder
c) der Gewichtsanteil der Verstärkungsfasern in der thermoplastischen Formmasse von 5 bis 80 Gew.-%, bevorzugt 20 bis 70 Gew.- % beträgt.

15. Verfahren nach einem der vorhergehenden Ansprüche, **dadurch gekennzeichnet, dass**

a) die Scherviskosität der thermoplastischen Formmasse bei einer Scherrate von 100 bis 10'000 Hz, gemessen nach ISO 11443, bevorzugt im Bereich von 10 bis 10'000 Pas, besonders bevorzugt im Bereich von 20 bis 3'000 Pas und ganz besonders bevorzugt im Bereich von 30 bis 1'000 Pas beträgt,
a) eingestellt wird und/oder
b) die thermoplastische Formmasse mit einem Druck von 50 bis
2000 bar in die Kavität des Spritzgusswerkzeugs eingespritzt wird.

16. Formteil aus einer mit Verstärkungsfasern gefüllten thermoplastischen Formmasse, hergestellt nach einem Verfahren nach einem der vorhergehenden Ansprüche, **dadurch gekennzeichnet, dass** die Ausrichtung der Verstärkungsfasern durch einen Orientierungstensor ($a_{ij}$) einer Gruppe von n in einem finiten Volumenelement enthaltenen Verstärkungsfasern definiert ist, mit

$$\left(a_{ij}\right) = \begin{pmatrix} a_{11} & a_{12} & a_{13} \\ \cdots & a_{22} & a_{23} \\ \cdots & \cdots & a_{33} \end{pmatrix}$$

dessen Elemente $a_{ij}$ wie nachfolgende definiert sind

$$a_{ij} = \frac{1}{n}\sum_{k=1}^{n} a_{ij}^{k} = \frac{1}{n}\left(\sum_{k=1}^{n} p_i^k \, p_j^k\right)$$

wobei die Orientierung der Fasern durch die Diagonalelemente $a_{11}$, $a_{22}$ und $a_{33}$ des Orientierungstensors $(a_{ij})$ bestimmt wird,

wobei $p_i^k$ bzw. $p_j^k$ jeweils die Komponenten eines Vektors $\vec{p^k}$ der Länge 1, der parallel zur k-ten Faser verläuft, darstellen, wobei gilt

$$\vec{p^k} = \begin{pmatrix} p_1^k \\ p_2^k \\ p_3^k \end{pmatrix}$$

wobei der Vektor $\vec{p^k}$ in jedem betrachteten finiten Volumenelement des vom mindestens einen variotherm beheizbaren Kanal temperierten Bereichs jeweils in einem lokalen Koordinatensystems angegeben wird, bei welchem

die x-Achse im jeweiligen betrachteten finiten Volumenelement jeweils tangential zur Trajektorie des mindestens einen variotherm beheizbaren Kanals festgelegt wird, die y-Achse normal zu x orientiert ist und die z-Achse normal zu x und y orientiert ist,

wobei eine im wesentlichen anisotrope Ausrichtung dann gegeben ist, wenn der Wert des Elements $a_{11}$ des Orientierungstensors $(a_{ij})$ in jedem gegebenen finiten Volumenelement zumindest 0,5 beträgt.

17. Formteil nach vorhergehendem Anspruch, **dadurch gekennzeichnet, dass** der Orientierungstensor $(a_{ij})$ 0,5 bis 0,98, bevorzugt 0,6 bis 0,95, weiter bevorzugt 0,65 bis 0,9, insbesondere 0,7 bis 0,85 beträgt.

18. Spritzgusswerkzeug zur Herstellung von Formteilen aus Verstärkungsfasern enthaltenden thermoplastischen Formmassen mittels Spritzgusses, umfassend mindestens zwei Teilformen, die zusammengesetzt eine eine äußere geometrische Gestaltung eines herzustellenden Formteils abbildende Kavität einschließen, wobei in mindestens einer der Teilformen mindestens ein Einlass zum Befüllen der Kavität mit einer in plastifiziertem Zustand befindlichen Verstärkungsfasern enthaltenden thermoplastischen Formmasse (Angussort) vorgesehen ist, und in einer oder in allen Teilformen mindestens ein variotherm beheizbarer Kanal in der die Kavität begrenzenden Wandung des oder der Teilformen ausgebildet ist, **dadurch gekennzeichnet, dass** das Spritzgusswerkzeug mindestens eine Überlauföffnung aufweist, die in fluidischer Kommunikation mit der Kavität steht, durch die beim Überfüllen des Spritzgusswerkzeugs thermoplastische Formmasse aus der Kavität fließen kann und der mindestens eine variotherm beheizbare Kanal am Angussort des Spritzgusswerkzeugs beginnt und an der mindestens einen Überlauföffnung endet.

19. Spritzgusswerkzeug nach vorhergehendem Anspruch, **dadurch gekennzeichnet, dass** beide Teilformen mindestens einen Durchbruch aufweisen, der eine Aussparung im herzustellenden Formteil bedingt, wobei mindestens ein variotherm beheizbarer Kanal vollständig oder zumindest bereichsweise umlaufend um den mindestens einen Durchbruch ausgebildet ist, und eine Fortsetzung in einer Zulaufrichtung und eine Fortsetzung in einer Ablaufrichtung aufweist, und die Fortsetzung in Zulaufrichtung und die Fortsetzung in Ablaufrichtung in Projektion des Durchbruchs versetzt zueinander angeordnet sind, bevorzugt um mindestens 120 ° versetzt zueinander angeordnet sind, insbesondere auf gegenüber liegenden Seiten des Durchbruchs angeordnet sind.

20. Spritzgusswerkzeug nach einem der beiden vorhergehenden Ansprüche, **dadurch gekennzeichnet, dass** das herzustellende Formteil im Gebrauch eine Hauptzugbelastungsrichtung aufweist, wobei die Fortsetzung in Zulaufrichtung und die Fortsetzung in Ablaufrichtung in Projektion des Durchbruchs jeweils eine Richtung aufweisen, die maximal 60°, bevorzugt maximal 50°, weiter bevorzugt maximal 40°, insbesondere maximal 30° von der Hauptzugbelastungsrichtung abweicht.

21. Spritzgusswerkzeug nach einem der Ansprüche 18 bis 20, **dadurch gekennzeichnet, dass** die Überlauföffnung jeweils in eine Überlaufkavität mündet.

22. Spritzgusswerkzeug nach einem der Ansprüche 18 bis 21, **dadurch gekennzeichnet, dass** die Fortsetzung in Zulaufrichtung bis zum Angussort des Spritzgusswerkzeugs fortgeführt ist und/oder die Fortsetzung in Ablaufrichtung bis zur Überlauföffnung fortgeführt ist.

**23.** Spritzgusswerkzeug nach einem der Ansprüche 18 bis 22, **dadurch gekennzeichnet, dass**

a) die Summe der Fläche des mindestens einen variotherm beheizbaren Kanals 1 bis 50 %, bevorzugt 3 bis 30 %, besonders bevorzugt 4 bis 20 %, insbesondere 5 bis 10 % der inneren Oberfläche der Kavität des Spritzgusswerkzeugs ausmacht und/oder

b) der mindestens eine variotherm beheizbare Kanal als variotherm beheizbares Band, bevorzugt mit konstanter Breite ausgebildet ist, wobei die Breite bevorzugt 0,2 bis 30 mm, bevorzugt 0,5 bis 10 mm beträgt.

**Claims**

**1.** Method for the production of moulded parts from thermoplastic moulding compounds comprising reinforcing fibres by means of injection moulding, in which

a cavity of an injection mould is overfilled with a thermoplastic moulding compound which is heated to a prescribed temperature $\vartheta_{FM}$, is present in the plasticised state and comprises reinforcing fibers, the cavity of the injection mould having in at least one wall at least one variotherm heatable channel extending along a trajectory,

before, during and/or after filling of the injection mould, the region of the injection mould which has the at least one variotherm channel of the wall is set to a temperature $\vartheta_{VT}$ and the remaining region of the wall of the injection mould is set,

permanently or at least at times, to a temperature $\vartheta_W$, whereby it applies that $\vartheta_W < \vartheta_{VT}$,

after overfilling the thermoplastic moulding compound comprising the reinforcing fibres is cooled until solidification,

the solidified moulded part is released from the injection mould, wherein the injection mould has at least one overflow opening and the at least one variotherm heatable channel begins at the gate location of the injection mould and is guided up to at least one overflow opening.

**2.** Method according to claim 1, **characterised in that** the injection mould respectively ends in an overflow cavity, the respective overflow cavity is in fluidic communication with the cavity of the injection mould, the at least one variotherm heatable channel begins at the gate location of the injection mould and is guided up to at least one overflow opening so that the thermoplastic moulding compound, in the case of overfilling of the injection mould, can emerge out of the cavity of the injection mould and enter into the respective overflow cavity via the at least one overflow opening.

**3.** Method according to one of the preceding claims, **characterised in that** the overfilling of the injection mould is effected such that

5 to 100% by volume, preferably 10 to 70% by volume and particularly preferably 15 to 50% by volume, of the volume of the cavity of the injection mould is overfilled,

after complete filling, a waiting time of 2 to 60 s is maintained before overfilling is commenced, during which preferably the temperature $\vartheta_{VT}$ in the region of the injection mould which has the at least one variotherm channel of the wall is raised and/or the temperature $\vartheta_W$ in the remaining region of the wall of the injection mould is lowered and/or

the overfilling lasts over a time span of 2 to 60 s.

**4.** Method according to one of the preceding claims, **characterised in that**, by adjustment of the temperature difference $\vartheta_W < \vartheta_{VT}$, an adjustment of the orientation of the reinforcing fibres in the thermoplastic moulding compound is effected, an essentially anisotropic orientation of the reinforcing fibres along the trajectory of the at least one variotherm heatable channel being achieved.

**5.** Method according to the preceding claim, **characterised in that** the orientation of the reinforcing fibres is defined by an orientation tensor $(a_{ij})$ of a group of n reinforcing fibres contained in one finite volume element, with

$$\left(a_{ij}\right) = \begin{pmatrix} a_{11} & a_{12} & a_{13} \\ \cdots & a_{22} & a_{23} \\ \cdots & \cdots & a_{33} \end{pmatrix}$$

the elements $a_{ij}$ of which are defined as follows

$$a_{ij} = \frac{1}{n}\sum_{k=1}^{n} a_{ij}^{k} = \frac{1}{n}\left(\sum_{k=1}^{n} p_i^k \, p_j^k\right)$$

the orientation of the fibres being determined by the diagonal elements $a_{11}$, $a_{22}$ and $a_{33}$ of the orientation tensor $(a_{ij})$,

$p_i^k$ or $p_j^k$ respectively representing the components of a vector $\overrightarrow{p^k}$ of length 1 which extends parallel to the $k^{th}$ fibre, whereby it applies that

$$\overrightarrow{p^k} = \begin{pmatrix} p_1^k \\ p_2^k \\ p_3^k \end{pmatrix}$$

the vector $\vec{p^k}$ being indicated in each considered finite volume element of the region of the at least one variotherm heatable channel respectively in a local coordinate system, in which

the x-axis in the respective considered finite volume element is fixed respectively tangentially to the trajectory of the at least one variotherm heatable channel,
the y-axis is orientated perpendicular to x
the z-axis is orientated perpendicular to x and y,

an essentially anisotropic orientation then being produced if the value of the element $a_{11}$ of the orientation tensor $(a_{ij})$ in each given finite volume element is at least 0.5, preferably 0.5 to 0.98, further preferably 0.6 to 0.95, further preferably 0.65 to 0.9, in particular 0.7 to 0.85.

6. Method according to one of the preceding claims, **characterised in that** there applies
$\vartheta_{VT} > \vartheta_G$ or $\vartheta_{VT} > \vartheta_K$, preferably $\vartheta_{VT} - \vartheta_G \geq 10$ K or $\vartheta_{VT} - \vartheta_K \geq 10$ K, $\vartheta_G$ meaning the glass transition temperature of amorphous thermoplastic moulding compounds and $\vartheta_K$ the crystallisation temperature of partially crystalline thermoplastic moulding compounds,

$$\vartheta_{VT} = \vartheta_{FM} \pm 40 \text{ K}$$

and/or

$$\vartheta_{VT} - \vartheta_W \geq 50 \text{ K,}$$

preferably $\vartheta_{VT} - \vartheta_W \geq 100$ K.

7. Method according to one of the preceding claims, **characterised in that** the at least one variotherm heatable channel is configured on one or both sides of the cavity in the wall of the injection mould.

8. Method according to one of the preceding claims, **characterised in that** the sum of the area of the at least one variotherm heatable channel constitutes 1 to 50%, preferably 3 to 30%, particularly preferably 4 to 20%, in particular 5 to 10%, of the inner surface of the cavity of the injection mould.

9. Method according to one of the preceding claims, **characterised in that** the injection mould has at least one breakthrough which causes a gap in the moulded part that is to be produced, the breakthrough having for example a round, oval, n-angled configuration, n being a natural integral number of 3 or more.

10. Method according to the preceding claim, **characterised in that** at least one variotherm heatable channel is configured in a way extending completely or at least in regions circumferentially about the at least one breakthrough, preferably about each breakthrough a variotherm heatable channel which encloses the respective breakthrough is respectively configured on one or both sides of the cavity in the wall of the injection mould.

11. Method according to the preceding claim, **characterised in that** the at least one variotherm channel, which is configured in a way extending completely or at least in regions circumferentially about the at least one breakthrough, has at least one continuation in an inflow direction and at least one continuation in an outflow direction, preferably the continuation in the inflow direction being continued up to the gate location of the injection mould and/or the continuation in the outflow direction being continued up to the at least one overflow opening.

12. Method according to the preceding claim, **characterised in that** the continuation in the inflow direction and the continuation in the outflow direction are disposed offset relative to each other in projection of the breakthrough, preferably are disposed offset relative to each other by at least 120°, in particular are disposed offset relative to each other by 180° ± 10°.

13. Method according to one of the two preceding claims, **characterised in that** the moulded part to be produced has a principal tensile load direction in use, respectively the continuation in the inflow direction and the continuation in the outflow direction having a direction, independently of each other in projection of the breakthrough, which deviates by at most 60°, preferably at most 50°, further preferably at most 40°, in particular at most 30°, from the principal tensile load direction.

14. Method according to one of the preceding claims, **characterised in that**

a) the thermoplastic moulding compound comprises or consists of at least one thermoplastic matrix polymer or a mixture of at least two thermoplastic matrix polymers in which the reinforcing fibres are present in a dispersed state, the at least one matrix polymer being selected preferably from the group consisting of polyamides, including polyamide imide, polyether amide and polyester amide; polycarbonates; polyolefins, in particular polyethylene, polypropylene and polystyrene or polyvinyl chloride (PVC); polyacrylates, in particular polyacrylic acid ester, such as e.g. poly-methyl(meth)acrylate; acrylonitrile-butadiene-styrene copolymer, acrylonitrile-styrene copolymer; polyesters, in particular polyethylene terephthalate, polybutylene terephthalate or polycyclohexylene terephthalate, polysulphones (in particular of the PSU, PESU, PPSU type), polyphenylene sulphide; polyethers, in particular polyoxymethylene, polyphenylene ether and polyphenylene oxide, liquidcrystalline polymers; polyether ketones; polyether ether ketones; polyimides; polyester imides, polyether ester amides; polyurethanes, in particular of the TPU or PUR type; polysiloxanes; celluloid and also mixtures or combinations hereof,

b) the reinforcing fibres are selected from the group consisting of glass fibres, carbon fibres and titanium whiskers, in particular with a round or a flattened cross-section and/or with a length of 0.2 to 20 mm and/or a diameter of 5 to 20 $\mu$m, and/or

c) the weight proportion of reinforcing fibres in the thermoplastic moulding compound is from 5 to 80% by weight, preferably 20 to 70% by weight.

15. Method according to one of the preceding claims, **characterised in that**

a) the shear viscosity of the thermoplastic moulding compound in the case of a shear rate of 100 to 10,000 Hz, measured according to ISO 11443, is preferably in the range of 10 to 10,000 Pas, particularly preferably in the range of 20 to 3,000 Pas and very particularly preferably in the range of 30 to 1,000 Pas,

b) is adjusted and/or

c) the thermoplastic moulding compound is injected into the cavity of the injection mould with a pressure of 50 to 2,000 bar.

16. Moulded part made of a thermoplastic moulding compound which is filled with reinforcing fibres, produced according to a method according to one of the preceding claims, **characterised in that** the orientation of the reinforcing fibres is defined by an orientation tensor $(a_{ij})$ of a group of n reinforcing fibres contained in one finite volume element, with

$$\left(a_{ij}\right) = \begin{pmatrix} a_{11} & a_{12} & a_{13} \\ \cdots & a_{22} & a_{23} \\ \cdots & \cdots & a_{33} \end{pmatrix}$$

the elements $a_{ij}$ of which are defined as follows

$$a_{ij} = \frac{1}{n}\sum_{k=1}^{n} a_{ij}^{k} = \frac{1}{n}\left(\sum_{k=1}^{n} p_i^k\, p_j^k\right)$$

the orientation of the fibres being determined by the diagonal elements $a_{11}$, $a_{22}$ and $a_{33}$ of the orientation tensor $(a_{ij})$,

$p_i^k$ or $p_j^k$ respectively representing the components of a vector $\overrightarrow{p^k}$ of length 1 which extends parallel to the $k^{th}$ fibre, whereby it applies that

$$\overrightarrow{p^k} = \begin{pmatrix} p_1^k \\ p_2^k \\ p_3^k \end{pmatrix}$$

the vector $\overrightarrow{p^k}$ being indicated in each considered finite volume element of the region temperature-controlled by the at least one variotherm heatable channel respectively in a local coordinate system, in which

the x-axis in the respective considered finite volume element is fixed respectively tangentially to the trajectory of the at least one variotherm heatable channel,
the y-axis is orientated perpendicular to x and
the z-axis is orientated perpendicular to x and y,

an essentially anisotropic orientation then being produced if the value of the element $a_{11}$ of the orientation tensor $(a_{ij})$ in each given finite volume element is at least 0.5.

17. Injection mould according to the preceding claim, **characterized in that** the Orientation tensor $(a_{ij})$ is 0.5 to 0.98, further preferably 0.6 to 0.95, further preferably 0.65 to 0.9, in particular 0.7 to 0.85.

18. Injection mould for the production of moulded parts made of thermoplastic moulding compounds comprising reinforcing fibres by means of injection moulding, comprising
at least two partial moulds which assembled enclose a cavity reproducing an outer geometric configuration of a moulded part to be produced, at least one inlet for filling the cavity with a thermoplastic moulding compound being in the plasticised state and comprising reinforcing fibres is provided in at least one of the partial moulds (gate location) and,
in one or in all of the partial moulds, at least one variotherm heatable channel is configured in the wall of the partial mould or moulds defining the cavity,
**characterized in that**
the injection mould has at least one overflow opening which is in fluidic communication with the cavity, into which, in the case of overfilling of the injection mould, thermoplastic moulding compound can flow from the cavity, and the at least variotherm heatable channel begins at the gate location of the injection mould and ends at the at least one overflow opening.

**19.** Injection mould according to the preceding claim, **characterised in that** both partial moulds have at least one breakthrough which causes a gap in the moulded part which is to be produced,
at least one variotherm heatable channel being configured in a way extending completely or at least in regions circumferentially about the at least one breakthrough, and having a continuation in an inflow direction and a continuation in an outflow direction, and the continuation in the inflow direction and the continuation in the outflow direction being disposed offset relative to each other in projection of the breakthrough, preferably being disposed offset relative to each other by at least 120°, in particular being disposed on oppositely-situated sides of the breakthrough.

**20.** Injection mould according to one of the two preceding claims, **characterised in that** the moulded part to be produced has a principal tensile load direction during use, the continuation in the inflow direction and the continuation in the outflow direction having, in projection of the breakthrough, respectively a direction which deviates from the principal tensile load direction by at most 60°, preferably at most 50°, further preferably at most 40°, in particular at most 30°.

**21.** Injection mould according to one of the claims 18 to 20, **characterised in that** the overflow opening end respectively in one overflow cavity.

**22.** Injection mould according to one of the claims 18 to 21, **characterised in that** the continuation in the inflow direction is continued up to the gate location of the injection mould and/or the continuation in the outflow direction is continued up to the overflow opening.

**23.** Injection mould according to one of the claims 18 to 22, **characterised in that**

a) the sum of the area of the at least one variotherm heatable channel constitutes 1 to 50%, preferably 3 to 30%, particularly preferably 4 to 20%, in particular 5 to 10%, of the inner surface of the cavity of the injection mould and/or
b) the at least one variotherm heatable channel is configured as a variotherm heatable strip, preferably with a constant width, the width being preferably 0.2 to 30 mm, preferably 0.5 to 10 mm.

## Revendications

**1.** Procédé de fabrication, par moulage par injection, de pièces moulées à partir de mélanges à mouler thermoplastiques contenant des fibres de renfort, dans lequel on remplit en excès, par une entrée, une cavité d'un moule d'injection avec un mélange à mouler thermoplastique, chauffé à une température prédéfinie $\vartheta_{FM}$, contenant des fibres de renfort se trouvant à l'état plastifié, la cavité du moule d'injection présentant, dans au moins une paroi, au moins un canal pouvant subir un chauffage variotherme, courant le long d'une trajectoire, la zone du moule d'injection présentant au moins un canal variotherme de la paroi étant, avant, pendant et/ou après le remplissage du moule d'injection, ajusté à une température $\vartheta_{VT}$, le reste de la paroi du moule d'injection étant d'une manière permanente ou au moins partiellement ajusté à une température $\vartheta_W$, avec $\vartheta_{W <} \vartheta_{VT}$,
après le remplissage en excès, le mélange à mouler thermoplastique contenant les fibres de renfort est refroidi jusqu'à solidification, et
on prélève du moule d'injection la pièce moulée solidifiée,
le moule d'injection présentant au moins une ouverture de trop-plein, et l'au moins un canal pouvant subir un chauffage variotherme commençant à l'entrée du moule d'injection et se poursuivant jusqu'à l'au moins une ou ouverture de trop-plein.

**2.** Procédé selon la revendication 1, **caractérisé en ce que** chaque ouverture de trop-plein se termine respectivement dans une cavité de trop-plein, chaque cavité de trop-plein étant, par l'intermédiaire de l'ouverture de trop-plein correspondante, en communication fluidique avec la cavité du moule d'injection, l'au moins un canal pouvant subir un chauffage variotherme commençant à l'entrée du moule d'injection et se poursuivant jusqu'à l'au moins une ouverture de trop-plein, de telle sorte que le mélange à mouler thermoplastique, lors du remplissage en excès du moule d'injection, puisse s'échapper de la cavité du moule d'injection et, en passant par l'au moins une ouverture de trop-plein, pénétrer dans la cavité de trop-plein correspondante.

**3.** Procédé selon l'une des revendications précédentes, **caractérisé en ce que** le remplissage en excès du moule d'injection est mis en oeuvre de telle sorte que
5 à 100 % en volume, de préférence 10 à 70 % en volume et d'une manière particulièrement préférée 15 à 50 % en volume, du volume de la cavité du moule d'injection soient remplis en excès,
après remplissage complet, on maintienne un temps d'attente de 2 à 60 secondes avant de commencer le remplissage en excès, temps pendant lequel de préférence on élève la température $\vartheta_{VT}$ dans la zone du moule d'injection présentant au moins un canal variotherme dans la paroi, et/ou on abaisse la température $\vartheta_W$ dans le reste de la paroi du moule d'injection, et/ou

le remplissage en excès perdure pendant un laps de temps de 2 à 60 s.

**4.** Procédé selon l'une des revendications précédentes, **caractérisé en ce que**, sous l'effet de l'ajustement de la différence de température $\vartheta_W < \vartheta_{VT}$, un ajustement de l'orientation des fibres de renfort a lieu dans le mélange à mouler thermoplastique, en atteignant une orientation pour l'essentiel anisotrope des fibres de renfort le long de la trajectoire de l'au moins un canal pouvant subir un chauffage variotherme.

**5.** Procédé selon la revendication précédente, **caractérisé en ce que** l'orientation des fibres de renfort est définie par un tenseur d'orientation ($a_{ij}$) d'un groupe de n fibres de renfort contenues dans un élément de volume fini, avec

$$(a_{ij}) = \begin{pmatrix} a_{11} & a_{12} & a_{13} \\ \cdots & a_{22} & a_{23} \\ \cdots & \cdots & a_{33} \end{pmatrix}$$

dont les éléments $a_{ij}$ sont définis comme suit

$$a_{ij} = \frac{1}{n}\sum_{k=1}^{n} a_{ij}^{k} = \frac{1}{n}\left(\sum_{k=1}^{n} p_i^k p_j^k\right)$$

où l'orientation des fibres est définie par les éléments diagonaux $a_{11}$, $a_{22}$ et $a_{33}$ du tenseur d'orientation ($a_{ij}$), $p_i^k$ et $p_j^k$ représentant les composantes d'un vecteur $\vec{p^k}$ de longueur 1, qui court parallèlement à la k-ième fibre, et l'on a :

$$\vec{p^k} = \begin{pmatrix} p_1^k \\ p_2^k \\ p_3^k \end{pmatrix}$$

où le vecteur $\vec{p^k}$, dans chaque élément volumique fini considéré de la zone de l'au moins un canal pouvant subir un chauffage variotherme, est donné dans un système de coordonnées locales dans lequel

l'axe x dans chaque élément volumique fini considéré, est défini tangentiellement à la trajectoire de l'au moins un canal pouvant subir un chauffage variotherme,

l'axe y est orienté normalement à x, et

l'axe z est orienté normalement à x et à y,

auquel cas on obtient une orientation pour l'essentiel anisotrope quand la valeur de l'élément $a_{11}$ du tenseur d'orientation ($a_{ij}$) est, dans chaque élément volumique fini donné, d'au moins 0,5, de préférence de 0,5 à 0,98, plus préférentiellement de 0,6 à 0,95, plus préférentiellement de 0,65 à 0,9, en particulier de 0,7 à 0,85.

**6.** Procédé selon l'une des revendications précédentes, **caractérisé en ce qu'**on a

$\vartheta_{VT} > \vartheta_G$ ou $\vartheta_{vt} > \vartheta_k$, de préférence $\vartheta_{VT} - \vartheta_G \geq 10$ K ou $\vartheta_{VT} - \vartheta_K \geq 10$ K,

$\vartheta_g$ étant la température de transition vitreuse de mélanges à mouler thermoplastiques amorphes et $\vartheta_k$ étant la température de cristallisation de mélanges à mouler thermoplastiques partiellement cristallins,

$$\vartheta_{VT} = \vartheta_{FM} \pm 40 \text{ K}$$

et/ou

$$\vartheta_{VT} - \vartheta_W \geq 50 \text{ K,}$$

de préférence $\vartheta_{VT} - \vartheta_W \geq 100$ K.

**7.** Procédé selon l'une des revendications précédentes, **caractérisé en ce que** l'au moins un canal pouvant subir un chauffage variotherme est réalisé sur un côté ou sur les deux côtés de la cavité dans la paroi du moule d'injection.

**8.** Procédé selon l'une des revendications précédentes, **caractérisé en ce que** la somme de l'aire de l'au moins un canal pouvant subir un chauffage variotherme représente 1 à 50 %, de préférence 3 à 30 %, d'une manière particulièrement préférée 4 à 20 %, en particulier 5 à 10 % de l'aire intérieure de la cavité du moule d'injection.

**9.** Procédé selon l'une des revendications précédentes, **caractérisé en ce que** le moule d'injection présente au moins une percée qui conduit à un évidement dans la pièce moulée à fabriquer, la percée étant conçue par exemple ronde, ovale, polygonale à n-sommets, n étant un nombre entier supérieur ou égal à 3.

**10.** Procédé selon l'une des revendications précédentes, **caractérisé en ce qu'**au moins un canal pouvant subir un chauffage variotherme est conçu, en totalité ou au moins par zones courant autour de l'au moins une percée, de préférence un canal pouvant subir un chauffage variotherme étant réalisé autour de chaque percée, sur un côté ou sur les deux côtés de la cavité dans la paroi du moule d'injection.

11. Procédé selon la revendication précédente, **caractérisé en ce que** l'au moins un canal variotherme formé en totalité ou au moins par zones courant autour de l'au moins une percée présente au moins un prolongement dans une direction d'amenée et au moins un prolongement dans une direction d'évacuation, le prolongement dans la direction d'amenée se poursuivant de préférence jusqu'à l'entrée du moule d'injection, et/ou le prolongement dans la direction d'évacuation se poursuivant jusqu'à l'au moins une ouverture de trop-plein.

12. Procédé selon la revendication précédente, **caractérisé en ce que** le prolongement dans la direction d'amenée et le prolongement dans la direction d'évacuation sont disposés décalés l'un par rapport à l'autre dans la projection de la percée, en étant décalés l'un par rapport à l'autre de préférence d'au moins 120°, en particulier en étant décalés l'un par rapport à l'autre de 180° ± 10°.

13. Procédé selon l'une des deux revendications précédentes, **caractérisé en ce que** la pièce moulée à fabriquer présente en cours d'utilisation une direction principale de la sollicitation en traction, le prolongement dans la direction d'amenée et le prolongement dans la direction d'évacuation présentant indépendamment l'une de l'autre, en projection de la percée, une direction dévie au maximum de 60°, de préférence au maximum de 50°, plus préférentiellement au maximum de 40°, en particulier au maximum de 30°, de la direction principale de la sollicitation en traction.

14. Procédé selon l'une des revendications précédentes, **caractérisé en ce que**

    a) le mélange à mouler thermoplastique contient au moins une matrice polymère thermoplastique ou un mélange d'au moins deux matrices polymères thermoplastiques dans lequel les fibres de renfort se présentent sous forme dispersée, ou en est constitué, l'au moins une matrice polymère étant de préférence choisie dans le groupe consistant en les polyamides, y compris le polyamide-imide, le polyétheramide et le polyesteramide ; les polycarbonates ; les polyoléfines, en particulier le polyéthylène, le polypropylène et le polystyrène ou le poly(chlorure de vinyle) (PVC) ; les polyacrylates, en particulier les poly(esters de l'acide acrylique), tels que par exemple le poly((méth)acrylate de méthyle) ; le copolymère acrylonitrile-butadiène-styrène, le copolymère acrylonitrile-styrène ; les polyesters, en particulier le poly(téréphtalate d'éthylène), le poly(téréphtalate de butylène) ou le poly(téréphtalate de cyclohexyle), les polysulfones (en particulier du type PSU, PESU, PPSU), le poly(sulfure de phénylène) ; les polyéthers, en particulier le polyoxyméthylène, le polyphénylène-éther et le poly(oxyde de phényle) ; les polymères cristaux liquides ; les polyéthercétones ; les polyétheréthercétones ; les polyimides ; les polyesterimides, les polyétheresteramides ; les polyuréthannes, en particulier du type TPU ou PUR ; les polysiloxanes ; le celluloïd, ainsi que les mélanges ou combinaisons de ceux-ci,
    b) les fibres de renfort sont choisies dans le groupe consistant en les fibres de verre, les fibres de carbone et les trichites de titane, ayant en particulier une section transversale ronde ou aplatie, et/ou une longueur de 0,2 à 20 mm et/ou un diamètre de 5 à 20 μm, et/ou
    c) le pourcentage en poids des fibres de renfort dans le mélange à mouler thermoplastique est de 5 à 80 % en poids, de préférence de 20 à 70 % en poids.

15. Procédé selon l'une des revendications précédentes, **caractérisé en ce que**

    a) la viscosité de cisaillement du mélange à mouler thermoplastique, pour une vitesse de cisaillement de 100 à 10 000 Hz, mesurée selon ISO 11443, de préférence dans la plage de 10 à 10 000 Pa.s, d'une manière particulièrement préférée dans la plage de 20 à 3000 Pa.s et d'une manière tout particulièrement préférée dans la plage de 30 à 1000 Pa.s,
    a) est ajustée, et/ou
    b) on injecte dans la cavité du moule d'injection le mélange à mouler thermoplastique sous une pression de 50 à 2000 bar.

16. Pièce moulée à partir d'un mélange à mouler thermoplastique rempli de fibres de renfort, fabriquée par un procédé selon l'une des revendications précédentes, **caractérisée en ce que** l'orientation des fibres de renfort est définie par un tenseur d'orientation $(a_{ij})$ d'un groupe de n fibres de renfort contenues dans un élément de volume fini, avec

$$(a_{ij}) = \begin{pmatrix} a_{11} & a_{12} & a_{13} \\ \cdots & a_{22} & a_{23} \\ \cdots & \cdots & a_{33} \end{pmatrix}$$

dont les éléments $a_{ij}$ sont définis comme suit

$$a_{ij} = \frac{1}{n}\sum_{k=1}^{n} a_{ij}^{k} = \frac{1}{n}\left(\sum_{k=1}^{n} p_{i}^{k}\, p_{j}^{k}\right)$$

où l'orientation des fibres est définie par les éléments diagonaux $a_{11}$, $a_{22}$ et $a_{33}$ du tenseur d'orientation $(a_{ij})$, $p_{i}^{k}$ et $p_{j}^{k}$ représentent les composantes d'un vecteur $\overrightarrow{p^{k}}$ de longueur 1,
qui court parallèlement à la k-ième fibre, et l'on a :

$$\overrightarrow{p^{k}} = \begin{pmatrix} p_{1}^{k} \\ p_{2}^{k} \\ p_{3}^{k} \end{pmatrix}$$

où le vecteur $\overrightarrow{p^{k}}$, dans chaque élément volumique fini considéré de la zone de l'au moins un canal pouvant subir un chauffage variotherme, est donné dans un système de coordonnées locales dans lequel

l'axe x dans chaque élément volumique fini considéré, est défini tangentiellement à la trajectoire de l'au moins un canal pouvant subir un chauffage variotherme,
l'axe y est orienté normalement à x, et
l'axe z est orienté normalement à x et à y,

une orientation pour l'essentiel anisotrope étant donnée quand la valeur de l'élément $a_{11}$ du tenseur d'orientation $(a_{ij})$, dans chaque élément volumique fini donné, est d'au moins 0,5.

**17.** Pièce moulée selon la revendication précédente, **caractérisée en ce que** le tenseur d'orientation $(a_{ij})$ est de 0,5 à 0,98, de préférence de 0,6 à 0,95, plus préférentiellement de 0,65 à 0,9, en particulier de 0,7 à 0,85.

**18.** Moule d'injection pour la fabrication, par moulage par injection, de pièces moulées à partir de mélanges à mouler thermoplastiques contenant des fibres de renfort, comprenant
au moins deux moules partiels qui, réunis, entourent une structure géométrique extérieure d'une cavité représentant une pièce moulée à fabriquer, au moins un orifice d'admission, destiné à remplir la cavité avec un mélange à mouler thermoplastique contenant des fibres de renfort se trouvant à l'état plastifié (entrée), étant prévu dans au moins l'un des moules partiels, et

dans un moule partiel ou dans la totalité des moules partiels, au moins un canal pouvant subir un chauffage variotherme étant réalisé dans la paroi, délimitant la cavité, du ou des moules partiels,
**caractérisé en ce que**
le moule d'injection présente au moins une ouverture de trop-plein, qui est en communication fluidique avec la cavité, par laquelle, lors du remplissage en excès du moule d'injection, le mélange à mouler thermoplastique peut s'écouler de la cavité, et l'au moins un canal pouvant subir un chauffage variotherme commençant à l'entrée du moule d'injection et se terminant au niveau d'au moins une ouverture de trop-plein.

**19.** Moule d'injection selon la revendication précédente, **caractérisé en ce que** les deux moules partiels présentent au moins une percée, qui détermine un évidement dans la pièce moulée à fabriquer,
dans lequel au moins un canal pouvant subir un chauffage variotherme est formé en totalité ou au moins par zones, courant autour de l'au moins une percée, et présentant un prolongement dans une direction d'amenée et un prolongement dans une direction d'évacuation,
et le prolongement dans la direction d'amenée et le prolongement dans la direction d'évacuation étant, en projection de la percée, disposés décalés l'un par rapport à l'autre, de préférence décalés l'un par rapport à l'autre d'au moins 120°, en particulier sur les côtés opposés de la percée.

**20.** Moule d'injection selon l'une des revendications précédentes, **caractérisé en ce que** la pièce moulée à fabriquer présente en cours d'utilisation une direction principale de la sollicitation en traction, le prolongement dans la direction d'amenée et le prolongement dans la direction d'évacuation présentant chacun, en projection de la percée, une direction déviée au maximum de 60°, de préférence au maximum de 50°, plus préférentiellement au maximum de 40°, en particulier au maximum de 30°, de la direction principale de la sollicitation en traction.

**21.** Moule d'injection selon l'une des revendications 18 à 20, **caractérisé en ce que** chaque ouverture de trop-plein débouche dans une cavité de trop-plein.

**22.** Moule d'injection selon l'une des revendications 18 à 21, **caractérisé en ce que** le prolongement dans la direction d'amenée se poursuit jusqu'à l'entrée du moule d'injection, et/ou le prolongement dans la direction d'évacuation se poursuit jusqu'à l'ouverture de trop-plein.

**23.** Moule d'injection selon l'une des revendications 18 à 22, **caractérisé en ce que**

a) la somme de l'aire de l'au moins un canal pouvant subir un chauffage variotherme représente 1 à 50 %, de préférence 3 à 30 %, d'une manière particulièrement préférée 4 à 20 %, en particulier 5 à 10 % de l'aire intérieure de la cavité du moule d'injection, et/ou

b) l'au moins un canal pouvant subir un chauffage variotherme est conçu comme une bande pouvant subir un chauffage variotherme, de préférence ayant une largeur constante, la largeur étant de préférence de 0,2 à 30 mm, de préférence de 0,5 à 10 mm.

Fig. 1

**Fig. 2**

Vector Principal Stress
Type: Vector Principal Stress
Unit: MPa
Time: 1

■ Maximum Principal
■ Middle Principal
■ Minimum Principal

max. Hauptspannungsvektor

D

EP 3 184 278 B1

**Fig. 3**

Fill time
= 1.271[s]

[s]

1.387

1.040

0.6933

0.3467

0.0000

K

D

A

Y

X

Z

EP 3 184 278 B1

**Fig. 4**

# Fig. 6

EP 3 184 278 B1

Fig. 7

# Fig. 8

Darstellung als
3D-solid Elemente

Darstellung als
3D-transparente
Elemente

# Fig. 9

a)

b)

EP 3 184 278 B1

# Fig. 10

a)

b)

EP 3 184 278 B1

Temperature:Probe Plot
Time = 12.29[s]

[C]

305.0

266.3

227.5

188.8

150.0

I

HR

A

II

Temperature_1
Time = 12.29[s]

[C]

454.8

378.6

302.4

226.2

150.0

HR

A

I

Fig. 11

Fig. 12

Fiber orientation tensor on elements

Fig. 13

a)

b)

## Fig. 14

Messpunkt zur Bestimmung der Faserorientierungsverteilung

**Verteilung der Faserorientierung**

- Txx konventioneller Prozess
- Tyy konventioneller Prozess
- Tzz konventioneller Prozess
- -- Txx Faserausrichtungsmethode
- -- Tyy Faserausrichtungsmethode
- -- Tzz Faserausrichtungsmethode

EP 3 184 278 B1

Fig. 15

a) E: anisotrop standard linear

b) F: anisotrop vario linear

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2009036089 A1
- EP 2623290 A1

### In der Beschreibung aufgeführte Nicht-Patentliteratur

- **H. HAMADA et al.** *Intern. Polymer Processing II,* 1988, vol. 3/4, 131-136
- Beitrag zur Entwicklung eines hochdynamischen variothermen Temperiersystems für Spritzgießwerkzeuge. **M. H. DECKERT.** Dissertation. Technische Universität Chemnitz, 16. September 2011
- **J. KASTNER et al.** *Pipeline zur dreidimensionalen Auswertung und Visualisierung der Faserverteilung in glasfaserverstärkten Kunststoffteilen aus-Röntgen-Computertomografiedaten,* 2008